# EUROPEAN PATENT APPLICATION

(11) **EP 4 665 074 A1**
(43) Date of publication of application: **17.12.2025**
(21) Application number: 24759647.1
(22) Date of filing: 20.02.2024
(51) Int. Cl.: H04W 76/15

(54) **MULTI-LINK COMMUNICATION METHOD AND APPARATUS**

(30) Priority: 20.02.2023 CN 202310178334; 28.08.2023 CN 202311095345
(71) Applicant: Huawei Technologies Co., Ltd., Shenzhen, Guangdong 518129 (CN)
(72) Inventor: HUANG, Guogang, Shenzhen, Guangdong 518129 (CN); LI, Yunbo, Shenzhen, Guangdong 518129 (CN); GAN, Ming, Shenzhen, Guangdong 518129 (CN); GUO, Yuchen, Shenzhen, Guangdong 518129 (CN)
(74) Representative: Gill Jennings & Every LLP
(86) International application number: PCT/CN2024/077673
(87) International publication number: WO 2024/174970

(57) **Abstract**

A multi-link communication method and an apparatus are disclosed, are used in a wireless local area network system that supports 802.11 series protocols such as a next-generation Wi-Fi protocol of IEEE 802.11ax, for example, 802.11be, Wi-Fi 7, or EHT, and a next-generation protocol of 802.1 1be, for example, Wi-Fi 8, UHR, or Wi-Fi AI, and may be further used in an ultra-wideband UWB-based wireless personal local area network system and a sensing (sensing) system. The method includes: A STA sends a communication frame, and correspondingly, an AP receives the communication frame. The communication frame may include n multi-link elements, and each multi-link element corresponds to one collocated AP MLD. The multi-link element includes identifier information of a non-collocated AP MLD and identifier information of the collocated AP MLD, and n collocated AP MLDs are affiliated with one non-collocated AP MLD. This can quickly and effectively identify the collocated AP MLD.

## Description

This application claims priorities to Chinese Patent Application No. 202310178334.7, filed with the China National Intellectual Property Administration on February 20, 2023 and entitled "MULTI-LINK COMMUNICATION METHOD AND APPARATUS", which is incorporated herein by reference in its entirety, and to Chinese Patent Application No. 202311095345.5, filed with the China National Intellectual Property Administration on August 28, 2023 and entitled "MULTI-LINK COMMUNICATION METHOD AND APPARATUS", both of which are incorporated herein by reference in their entireties.

### TECHNICAL FIELD

This application relates to the field of communication technologies, and in particular, to a multi-link communication method and an apparatus.

### BACKGROUND

A multi-link device (multi-link device, MLD) is a device that has a plurality of stations respectively operating on different frequency bands or channels. A non-access point (access point, AP) multi-link device (non-AP MLD) may perform a multi-link establishment operation on one link (link) by using a link identifier (link identifier), to implement association with an AP MLD and establish a plurality of links.

However, with evolution of a multi-link device technology, the foregoing manner of establishing a link by using a link identifier is no longer applicable.

### SUMMARY

Embodiments of this application provide a multi-link communication method and an apparatus, to quickly and effectively identify a collocated AP MLD. Therefore, a UHR non-AP MLD can quickly and effectively establish a link with the collocated AP MLD.

According to a first aspect, an embodiment of this application provides a multi-link communication method. The method is applied to a first communication apparatus. The method includes:
determining a communication frame, where the communication frame includes n multi-link elements, each multi-link element corresponds to one second AP MLD, the multi-link element includes identifier information of a first access point multi-link device AP MLD and identifier information of the second AP MLD, the n second AP MLDs are affiliated with the first AP MLD, and n is an integer greater than or equal to 1; and sending the communication frame.

In this embodiment of this application, the first communication apparatus may include an AP, a STA, a Wi-Fi chip, or the like. The communication frame may include a management frame. The first AP MLD may include a non-collocated AP MLD (non-collocated AP MLD), and the second AP MLD may include a collocated AP MLD (collocated AP MLD). For a system earlier than ultra-high reliability (ultra high reliability, UHR) (for example, referred to as pre-UHR), when establishing a link with an AP MLD, a non-AP MLD may learn of, by using a link identifier, the link established by the non-AP MLD. However, for the UHR system, when a UHR non-AP MLD is associated with a non-collocated AP MLD and establishes a link with a collocated AP MLD, if the link is still identified only by using a link identifier, the UHR non-AP MLD may not quickly identify a link that needs to be established with a collocated AP MLD by the UHR non-AP MLD.

Therefore, in this embodiment of this application, the multi-link element includes identifier information of the collocated AP MLD and identifier information of the non-collocated AP MLD, so that the UHR non-AP MLD can quickly and effectively identify a collocated AP MLD or a link in the collocated AP MLD.

In a possible implementation, the identifier information of the first AP MLD includes at least one of the following: an identifier (identifier, ID) of the first AP MLD or an MLD medium access control (medium access control, MAC) address of the first AP MLD; and the identifier information of the second AP MLD includes at least one of the following: an ID of the second AP MLD or an MLD MAC address of the second AP MLD.

In this embodiment of this application, both an MLD MAC address of the non-collocated AP MLD and an ID of the non-collocated AP MLD may be included in the multi-link element, or one of the two is included in the multi-link element. For example, the ID of the non-collocated AP MLD may be set by the non-collocated AP MLD, or may be configured by an operator (for reference only). Similarly, both an MLD MAC address of the collocated AP MLD and an ID of the collocated AP MLD may be included in the multi-link element, or one of the two is included in the multi-link element. For example, the ID of the collocated AP MLD may be different from the MLD MAC address of the collocated AP MLD. For example, the ID of the collocated AP MLD may be allocated by a non-collocated AP MLD. For example, the ID of the collocated AP MLD may be the same as an ID of an AP MLD. For example, the ID of the AP MLD may be set by the AP MLD. For example, the ID of the collocated AP MLD is the same as the MLD MAC address of the collocated AP MLD, and the MLD MAC address of the collocated AP MLD may be set before delivery.

In a possible implementation, when the first communication apparatus is a STA, the multi-link element further includes an MLD MAC address of a non-AP MLD with which the STA is affiliated.

In a possible implementation, the multi-link element further includes a presence bitmap (presence bitmap), and the presence bitmap indicates whether the multi-link element includes at least one of the following: the ID of the first AP MLD, the MLD MAC address of the first AP MLD, the ID of the second AP MLD, or the MLD MAC address of the second AP MLD.

In this embodiment of this application, whether the multi-link element includes the foregoing content may depend on a function or a function of the communication frame. For example, the multi-link element may include an MLD MAC address of a non-AP MLD, an ID of a non-collocated AP MLD (or an MLD MAC address of the non-collocated AP MLD), and an ID of a collocated AP MLD (or an MLD MAC address of the collocated AP MLD). For example, the multi-link element may include an MLD MAC address of a collocated AP MLD, an AP MLD ID (for example, set by the AP MLD), a collocated AP MLD ID (for example, set by a non-collocated AP MLD), and a non-collocated AP MLD ID (an MLD MAC address of the non-collocated AP MLD). The example shown herein is merely an example, and should not be construed as a limitation on embodiments of this application.

In a possible implementation, when n is greater than or equal to 2, MLD MAC addresses of first AP MLDs in all the multi-link elements are the same, and IDs of the first AP MLDs in all the multi-link elements are the same.

In this embodiment of this application, n=2, n=3, or n=4. Details are not listed herein. In this case, each of the n multi-link elements included in the communication frame may correspond to one collocated AP MLD, and a same non-collocated AP MLD is identified in the n multi-link elements. It may be understood that the multi-link element described in this embodiment of this application may also be referred to as a basic multi-link element (basic multi-link element).

In a possible implementation, the communication frame further includes a reduced neighbor report element (reduced neighbor report element), and the reduced neighbor report element carries the identifier information of the first AP MLD and/or the identifier information of the second AP MLD.

For example, the reduced neighbor report element may carry an ID of a non-collocated AP MLD (or an MLD MAC address of the non-collocated AP MLD) and/or an ID of a collocated AP MLD (or an MLD MAC address of the collocated AP MLD).

In a possible implementation, the method further includes: when the first communication apparatus is an AP, sending a basic service set (basic service set, BSS) transition management (BSS transition management, BTM) request (BTM request) frame, where the BTM request frame includes link transition (link transition) information, and the link transition information indicates whether to perform switching between second AP MLDs; and receiving an acknowledgment (acknowledge, ACK) frame of the BTM request frame.

In a possible implementation, the method further includes: when the first communication apparatus is a STA, receiving a BTM request frame, where the BTM request frame includes link transition information, and the link transition information indicates whether to perform switching between second AP MLDs; and sending an acknowledgment frame of the BTM request frame.

In this embodiment of this application, the BTM request frame further includes BSS termination included information and link removal information. The BSS termination included information indicates whether to terminate a BSS of an affiliated AP, whether to terminate all BSSs of a collocated AP MLD, or whether to terminate all BSSs of a non-collocated AP MLD. The link removal information indicates whether to remove a link. Therefore, in the UHR system, the link transition information, BSS termination included information, and link removal information may indicate whether to perform link transition of different non-collocated AP MLDs, or perform link transition of different collocated AP MLDs affiliated with a same non-collocated AP MLD.

In a possible implementation, the method further includes: when the first communication apparatus is the AP, receiving a BTM response (BTM response) frame, where the BTM response frame includes a target basic service set identifier (target BSSID), the target BSSID indicates an MLD MAC address of a target AP MLD, and the target AP MLD includes a first AP MLD or a second AP MLD; and sending an acknowledgment frame of the BTM response frame.

In a possible implementation, the method further includes: when the first communication apparatus is the STA, sending a BTM response frame, where the BTM response frame includes a target basic service set identifier BSSID, the target BSSID indicates an MLD MAC address of a target AP MLD, and the target AP MLD includes a first AP MLD or a second AP MLD; and receiving an acknowledgment frame of the BTM response frame.

In this embodiment of this application, the BTM response frame may include a BTM status code. For example, the BTM status code may include a first value, and the first value may indicate that BSS transition of different AP MLDs affiliated with a same non-collocated AP MLD is accepted. In this case, the target BSSID may be set to an MLD MAC address of a corresponding target collocated AP MLD. For another example, the BTM status code may include a second value, and the second value may indicate that BSS transition of different non-collocated AP MLDs is accepted. In this case, the target BSSID may be set to an MLD MAC address of a target non-collocated AP MLD, and the neighbor report element indicates a target collocated AP MLD, affiliated with the target non-collocated AP MLD, to which a BSS is transferred. Alternatively, in this case, the target BSSID may be set to an MLD MAC address of a collocated AP MLD affiliated with the target non-collocated AP MLD.

According to a second aspect, an embodiment of this application provides a multi-link communication method. The method is applied to a second communication apparatus. The method includes:
receiving a communication frame, where the communication frame includes n multi-link elements, each multi-link element corresponds to one second AP MLD, the multi-link element includes identifier information of a first access point multi-link device AP MLD and identifier information of the second AP MLD, the n second AP MLDs are affiliated with the first AP MLD, and n is an integer greater than or equal to 1; and parsing the communication frame.

In this embodiment of this application, the second communication apparatus may include a STA, an AP, a Wi-Fi chip, or the like. If a first communication apparatus includes an AP, the second communication apparatus may include a STA. For another example, a first communication apparatus may include a STA, and the second communication apparatus may include an AP.

In a possible implementation, the identifier information of the first AP MLD includes at least one of the following: an identifier ID of the first AP MLD or an MLD medium access control MAC address of the first AP MLD; and the identifier information of the second AP MLD includes at least one of the following: an ID of the second AP MLD or an MLD MAC address of the second AP MLD.

In a possible implementation, when the second communication apparatus is a STA, the multi-link element further includes an MLD MAC address of a non-AP MLD with which the STA is affiliated.

In a possible implementation, the multi-link element further includes a presence bitmap, and the presence bitmap indicates whether the multi-link element includes at least one of the following: the ID of the first AP MLD, the MLD MAC address of the first AP MLD, the ID of the second AP MLD, or the MLD MAC address of the second AP MLD.

In a possible implementation, when n is greater than or equal to 2, MLD MAC addresses of first AP MLDs in all the multi-link elements are the same, and IDs of the first AP MLDs in all the multi-link elements are the same.

In a possible implementation, the communication frame further includes a reduced neighbor report element, and the reduced neighbor report element carries the identifier information of the first AP MLD and/or the identifier information of the second AP MLD.

In a possible implementation, the method further includes: when the second communication apparatus is a STA, receiving a BTM request frame, where the BTM request frame includes link transition information, and the link transition information indicates whether to perform switching between second AP MLDs; and sending an acknowledgment frame of the BTM request frame.

In a possible implementation, the method further includes: when the second communication apparatus is an AP, sending a basic service set BSS transition management BTM request frame, where the BTM request frame includes link transition information, and the link transition information indicates whether to perform switching between second AP MLDs; and receiving an acknowledgment frame of the BTM request frame.

In a possible implementation, the method further includes:
when the second communication apparatus is the STA, sending a BTM response frame, where the BTM response frame includes a target basic service set identifier BSSID, the target BSSID indicates an MLD MAC address of a target AP MLD, and the target AP MLD includes a first AP MLD or a second AP MLD; and receiving an acknowledgment frame of the BTM response frame.

In a possible implementation, the method further includes: when the second communication apparatus is the AP, receiving a BTM response frame, where the BTM response frame includes a target basic service set identifier BSSID, the target BSSID indicates an MLD MAC address of a target AP MLD, and the target AP MLD includes a first AP MLD or a second AP MLD; and sending an acknowledgment frame of the BTM response frame.

For specific descriptions of the second aspect, refer to the foregoing first aspect or the following specific implementations.

It may be understood that, for the first aspect and the second aspect, the first communication apparatus may be an AP, and the second communication apparatus may be a STA; or the first communication apparatus may be a STA, and the second communication apparatus may be an AP. Alternatively, in a possible implementation, the first communication apparatus may be a non-collocated AP MLD, and the second communication apparatus may be an affiliated AP of a collocated AP MLD affiliated with the non-collocated AP MLD.

According to a third aspect, an embodiment of this application provides a multi-link communication method. The method includes:
sending a multi-link reconfiguration request frame, where the multi-link reconfiguration request frame includes indication information, and the indication information indicates whether to request to add a link; and receiving a multi-link reconfiguration response frame.

According to a fourth aspect, an embodiment of this application provides a multi-link communication method. The method includes:
receiving a multi-link reconfiguration request (multi-link reconfiguration request) frame, where the multi-link reconfiguration request frame includes indication information, and the indication information indicates whether to request to add a link; and sending a multi-link reconfiguration response (multi-link reconfiguration response) frame.

With reference to the third aspect or the fourth aspect, in a possible implementation, the indication information includes first indication information, and the first indication information indicates to request to add a link. The multi-link reconfiguration request frame further includes first link information, and the first link information indicates link information of a station side corresponding to the added link. The multi-link reconfiguration response frame includes second link information, and the second link information indicates link information of an access point side corresponding to the added link.

In this embodiment of this application, the first indication information indicates to request to add the link, so that a communication receiver can effectively learn that the multi-link reconfiguration request frame includes the first link information, to correctly parse the multi-link reconfiguration request frame.

In a possible implementation, the multi-link reconfiguration request frame includes a frame body of a reassociation request frame (except for some fields and elements) (frame body of reassociation request frame except for some fields and elements). The first link information shown in this embodiment of this application is determined based on the frame body of the reassociation request frame (except for some fields and elements), for example, based on related fields and elements in the frame body of the reassociation request frame (except for some fields and elements). The multi-link reconfiguration request frame may carry information of a STA side corresponding to the added link.

In a possible implementation, the first link information includes at least one of the following information: capability information, supported rates and basic service set BSS membership selectors, extended supported rates and BSS membership selectors, a power capability, supported channels, a basic multi-link element, or an operating information (operating channel information, OCI) element.

In a possible implementation, the multi-link reconfiguration response frame includes a frame body of a reassociation response frame (except for some fields and elements) (frame body of reassociation response frame except for some fields and elements). The second link information shown in this embodiment of this application is determined based on the frame body of the reassociation response frame (except for some fields and elements), for example, based on related fields and elements in the frame body of the reassociation response frame (except for some fields and elements). The multi-link reconfiguration response frame may carry information of an AP side corresponding to the added link.

In a possible implementation, the second link information includes at least one of the following information: capability information, a status code, supported rates and BSS membership selectors, extended supported rates and BSS membership selectors, an enhanced distributed channel access (enhanced distributed channel access, EDCA) parameter set, a fast transition element (fast transition element, FTE), a basic multi-link element, or an operational channel information OCI element.

In a possible implementation, the FTE includes a group temporal key or a multi-link operating (multi-link operating, MLO) group temporal key (multi-link operating group temporal key, MLO GTK), an integrity group temporal key or a multi-link operating integrity group temporal key (multi-link operating integrity group temporal key, MLO IGTK), and a beacon integrity group temporal key or a multi-link operating beacon integrity group temporal key (multi-link operating beacon integrity group temporal key, MLO BIGTK).

In a possible implementation, the multi-link reconfiguration request frame further includes a reconfiguration multi-link element (reconfiguration multi-link element), and the reconfiguration multi-link element is used to carry link information of a deleted link or link information of a link whose link operation parameter is updated.

In a possible implementation, the basic multi-link element includes a common information field, the common information field carries link information of one link in M added links, and M is a positive integer.

In a possible implementation, the common information field includes at least one of the following: a link identifier ID, a station medium access control STA MAC address, a beacon interval, a timing synchronization function TSF offset, delivery traffic indication message DTIM information, or an NSTR indication bitmap, where the link ID field indicates a link ID of the one link; the STA MAC address field indicates a STA MAC address of a non-AP MLD side corresponding to the one link or a BSSID of an AP MLD side corresponding to the one link; the beacon interval field indicates a beacon interval for the one link; the TSF offset field indicates a difference between a TSF timer of an AP corresponding to the one link and a TSF timer of a transmit link; the DTIM information field includes a DTIM count field and a DTIM period field, where the DTIM count field indicates a quantity of beacon frames to a next DTIM, and the DTIM period field indicates a quantity of beacon intervals between two consecutive DTIMs; and the NSTR indication bitmap indicates whether the one link and another link are NSTR links.

In a possible implementation, when M is greater than or equal to 2, the basic multi-link element further includes M-1 per-STA profile subelements, each per-STA profile subelement is used to carry link information of one link in M-1 links, and the M-1 links are M-1 links except for the one link in the N links.

In this embodiment of this application, the basic multi-link element in the multi-link reconfiguration request frame and the basic multi-link element in the multi-link reconfiguration response frame have a same format. However, the basic multi-link element in the multi-link reconfiguration request frame carries the link information of the STA side corresponding to the added link, and the basic multi-link element in the multi-link reconfiguration response frame carries the link information of the AP side corresponding to the added link.

In a possible implementation, the multi-link reconfiguration response frame further includes a count field and a reconfiguration status list, the count field indicates a quantity of link IDs and status codes in the reconfiguration status list, and the quantity of link IDs and status codes corresponds to a quantity of per-STA profile subelements carried in the reconfiguration multi-link element in the multi-link reconfiguration request frame.

According to a fifth aspect, an embodiment of this application provides a multi-link communication method. The method includes:
sending a multi-link reconfiguration request frame, where the multi-link reconfiguration request frame includes a first basic multi-link element, the first basic multi-link element includes M per-STA profile subelements corresponding to M added links, and each per-STA profile subelement indicates link information of a station STA side corresponding to one link in the M links; and receiving a multi-link reconfiguration response frame, where the multi-link reconfiguration response frame includes a second basic multi-link element, the second basic multi-link element includes M per-STA profile subelements corresponding to M added links, and each per-STA profile subelement indicates link information of an access point AP side corresponding to one link in the M links.

According to a sixth aspect, an embodiment of this application provides a multi-link communication method. The method includes:
receiving a multi-link reconfiguration request frame, where the multi-link reconfiguration request frame includes a first basic multi-link element, the first basic multi-link element includes M per-STA profile subelements corresponding to M added links, and each per-STA profile subelement indicates link information of a station STA side corresponding to one link in the M links; and sending a multi-link reconfiguration response frame, where the multi-link reconfiguration response frame includes a second basic multi-link element, the second basic multi-link element includes M per-STA profile subelements corresponding to M added links, and each per-STA profile subelement indicates link information of an access point AP side corresponding to one link in the M links.

In this embodiment of this application, a format of the first basic multi-link element is the same as a format of the second basic multi-link element. However, the first basic multi-link element carries the link information of the STA side corresponding to the added link, and the second basic multi-link element carries the link information of the AP side corresponding to the added link.

In a possible implementation, the multi-link reconfiguration request frame further includes a reconfiguration multi-link element, and the reconfiguration multi-link element is used to carry link information of a deleted link or link information of a link whose link operation parameter is updated.

In a possible implementation, the multi-link reconfiguration response frame further includes a count field and a reconfiguration status list, the count field indicates a quantity of link IDs and status codes in the reconfiguration status list, and the quantity of link IDs and status codes corresponds to a quantity of per-STA profile subelements carried in the reconfiguration multi-link element in the multi-link reconfiguration request frame.

In a possible implementation, the common information field in the first basic multi-link element does not include a link identifier ID field.

According to a seventh aspect, an embodiment of this application provides a communication apparatus, configured to perform the method in any one of the first aspect or the possible implementations of the first aspect. The communication apparatus includes a unit for performing the method in any one of the first aspect or the possible implementations of the first aspect.

According to an eighth aspect, an embodiment of this application provides a communication apparatus, configured to perform the method in any one of the second aspect or the possible implementations of the second aspect. The communication apparatus includes a unit for performing the method in any one of the second aspect or the possible implementations of the second aspect.

According to a ninth aspect, an embodiment of this application provides a communication apparatus, configured to perform the method in any one of the third aspect, the fifth aspect, or the possible implementations of the third aspect or the fifth aspect. The communication apparatus includes a unit for performing the method in any one of the third aspect, the fifth aspect, or the possible implementations of the third aspect or the fifth aspect.

According to a tenth aspect, an embodiment of this application provides a communication apparatus, configured to perform the method in any one of the fourth aspect, the sixth aspect, or the possible implementations of the fourth aspect or the sixth aspect. The communication apparatus includes a unit for performing the method in any one of the fourth aspect, the sixth aspect, or the possible implementations of the fourth aspect or the sixth aspect.

In the seventh aspect to the tenth aspect, the communication apparatus and the communication apparatus may include a transceiver unit and a processing unit. For specific descriptions of the transceiver unit and the processing unit, refer to the apparatus embodiments provided below.

According to an eleventh aspect, an embodiment of this application provides a communication apparatus. The communication apparatus includes a processor, configured to perform the method in any one of the first aspect to the sixth aspect or the possible implementations of the first aspect to the sixth aspect. Alternatively, the processor is configured to execute a program stored in a memory. When the program is executed, the method in any one of the first aspect to the sixth aspect or the possible implementations of the first aspect to the sixth aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a twelfth aspect, an embodiment of this application provides a communication apparatus. The communication apparatus includes a logic circuit and an interface. The logic circuit is coupled to the interface. The logic circuit is configured to determine a communication frame. The interface is configured to output the communication frame.

In a possible implementation, the interface is further configured to output a BTM request frame and input an acknowledgment frame of the BTM request frame; or the interface is further configured to input a BTM request frame and output an acknowledgment frame of the BTM request frame.

In a possible implementation, the interface is further configured to input a BTM response frame and output an acknowledgment frame of the BTM response frame; or the interface is further configured to output a BTM response frame and input an acknowledgment frame of the BTM response frame.

It may be understood that for the communication apparatus in the twelfth aspect, refer to the first aspect or the following specific implementations.

According to a thirteenth aspect, an embodiment of this application provides a communication apparatus. The communication apparatus includes a logic circuit and an interface. The logic circuit is coupled to the interface. The interface is configured to input a communication frame. The logic circuit is configured to parse the communication frame.

In a possible implementation, the interface is further configured to input a BTM request frame and output an acknowledgment frame of the BTM request frame; or the interface is further configured to output a BTM request frame and input an acknowledgment frame of the BTM request frame.

In a possible implementation, the interface is further configured to output a BTM response frame and input an acknowledgment frame of the BTM response frame; or the interface is further configured to input a BTM response frame and output an acknowledgment frame of the BTM response frame.

It may be understood that for the communication apparatus in the thirteenth aspect, refer to the second aspect or the following specific implementations.

According to a fourteenth aspect, an embodiment of this application provides a communication apparatus. The communication apparatus includes a logic circuit and an interface. The logic circuit is coupled to the interface. The interface is configured to output a multi-link reconfiguration request frame and input a multi-link reconfiguration response frame.

According to a fifteenth aspect, an embodiment of this application provides a communication apparatus. The communication apparatus includes a logic circuit and an interface. The logic circuit is coupled to the interface. The interface is configured to input a multi-link reconfiguration request frame and output a multi-link reconfiguration response frame.

It may be understood that for the communication apparatuses in the fourteenth aspect and the fifteenth aspect, refer to the third aspect, the fourth aspect, or the following specific implementations.

According to a sixteenth aspect, an embodiment of this application provides a computer-readable storage medium. The computer-readable storage medium is configured to store a computer program, and when the computer program is run on a computer, the method in any one of the first aspect to the sixth aspect or the possible implementations of the first aspect to the sixth aspect is performed.

According to a seventeenth aspect, an embodiment of this application provides a computer program product. The computer program product includes a computer program, and when the computer program is run on a computer, the method in any one of the first aspect to the sixth aspect or the possible implementations of the first aspect to the sixth aspect is performed.

According to an eighteenth aspect, an embodiment of this application provides a computer program. When the computer program is run on a computer, the method in any one of the first aspect to the sixth aspect or the possible implementations of the first aspect to the sixth aspect is performed.

According to a nineteenth aspect, an embodiment of this application provides a communication system. The communication system includes a first communication apparatus and a second communication apparatus. The first communication apparatus is configured to perform the method in any one of the first aspect or the possible implementations of the first aspect, and the second communication apparatus is configured to perform the method in any one of the second aspect or the possible implementations of the second aspect.

According to a twentieth aspect, an embodiment of this application provides a communication system. The communication system includes an AP and a STA. The STA is configured to perform the method in any one of the third aspect, the fifth aspect, or the possible implementations of the third aspect or the fifth aspect, and the AP is configured to perform the method in any one of the fourth aspect, the sixth aspect, or the possible implementations of the fourth aspect or the sixth aspect.

### BRIEF DESCRIPTION OF DRAWINGS

FIG. 1 is a diagram of an architecture of a communication system according to an embodiment of this application;
FIG. 2 is a diagram of a manner of connection between a multi-link AP and a multi-link STA according to an embodiment of this application;
FIG. 3a shows a scenario of communication between an AP MLD and a non-AP MLD according to an embodiment of this application;
FIG. 3b shows a scenario of communication between an AP MLD and a non-AP MLD according to an embodiment of this application;
FIG. 4 is a diagram of an architecture of a communication system according to an embodiment of this application;
FIG. 5 is a schematic flowchart of a multi-link communication method according to an embodiment of this application;
FIG. 6 is a schematic flowchart of another multi-link communication method according to an embodiment of this application;
FIG. 7 is a diagram of a multi-link element according to an embodiment of this application;
FIG. 8a is diagram of a TID-to-link mapping element according to an embodiment of this application;
FIG. 8b is a diagram of a reduced neighbor report element according to an embodiment of this application;
FIG. 8c is a diagram of another reduced neighbor report element according to an embodiment of this application;
FIG. 9a is a diagram of an AP switching scenario according to an embodiment of this application;
FIG. 9b is a schematic flowchart of still another multi-link communication method according to an embodiment of this application;
FIG. 10a is a diagram of a BTM request frame according to an embodiment of this application;
FIG. 10b is a diagram of a BTM response frame according to an embodiment of this application;
FIG. 11a is a schematic flowchart of yet another multi-link communication method according to an embodiment of this application;
FIG. 11b is a diagram of a multi-link reconfiguration element according to an embodiment of this application;
FIG. 11c is a diagram of an OCI element according to an embodiment of this application;
FIG. 12a is a diagram of a scenario according to an embodiment of this application;
FIG. 12b is a diagram of another scenario according to an embodiment of this application;
FIG. 12c is a diagram of a multi-link reconfiguration request frame according to an embodiment of this application;
FIG. 13 is a diagram of a structure of a communication apparatus according to an embodiment of this application;
FIG. 14 is a diagram of a structure of a communication apparatus according to an embodiment of this application;
FIG. 15 is a diagram of a structure of a communication apparatus according to an embodiment of this application;
FIG. 16 is a diagram of a communication scenario according to an embodiment of this application;
FIG. 17 is a diagram of a format of a reconfiguration multi-link element according to an embodiment of this application;
FIG. 18a is a diagram of a format of a basic multi-link element according to an embodiment of this application;
FIG. 18b is a diagram of a format of a common information field in a basic multi-link element according to an embodiment of this application;
FIG. 18c is a diagram of a format of DTIM information according to an embodiment of this application; and
FIG. 19 is a diagram of a multi-link device according to an embodiment of this application.

### DESCRIPTION OF EMBODIMENTS

For ease of understanding technical solutions of this application, this application is further described with reference to accompanying drawings below.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification indicates that a specific feature, structure, or characteristic described with reference to the embodiment may be included in at least one embodiment of this application. The phrase shown at various locations in the specification may not necessarily mean a same embodiment, and is not an independent or alternative embodiment exclusive from another embodiment. It may be understood explicitly and implicitly by persons skilled in the art that embodiments described in the specification may be combined with another embodiment.

In this application, "at least one piece (item)" means one or more, "a plurality of' means two or more, "at least two pieces (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. "Or" indicates that two relationships may exist. For example, only A exists and only B exists. If A and B are not mutually exclusive, it may indicate that three relationships exist. For example, only A exists, only B exists, and both A and B exist. The character "/" generally indicates an "or" relationship between the associated objects. "At least one item (piece) of the following" or a similar expression thereof means any combination of these items. For example, at least one item (piece) of a, b, or c may indicate a, b, c, a and b, a and c, b and c, or a, b, and c.

The technical solutions provided in embodiments of this application may be applied to a WLAN system, for example, Wi-Fi. The method provided in embodiments of this application is applicable to IEEE 802.11 series protocols, for example, the 802.11a/b/g protocol, the 802.11n protocol, the 802.11ac protocol, the 802.11ax protocol, the 802.11be protocol, or a next-generation protocol. Examples are not enumerated. The technical solutions provided in embodiments of this application may be further applied to a wireless personal area network (wireless personal area network, WPAN) based on a UWB technology. The method provided in embodiments of this application is applicable to IEEE 802.15 series protocols, for example, the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems, for example, an internet of things (internet of things, IoT) system, a vehicle-to-X (vehicle-to-X, V2X) system, and a narrow band internet of things (narrow band internet of things, NB-IoT) system, may be applied to a device in an internet of vehicles, an internet of things node, a sensor, and the like in an internet of things (IOT, internet of things), a smart camera, a smart remote control, and a smart water or electricity meter in a smart home, a sensor in a smart city, and the like, or may be further applied to a long term evolution (long term evolution, LTE) system, a 5th generation (5th generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in an internet of things, an entertainment terminal (for example, a wearable device such as augmented reality (augmented reality, AR) or virtual reality (virtual reality, VR)), a smart device (for example, a printer, a projector, a loudspeaker, or a stereo) in smart office, an internet of vehicles device in an internet of vehicles, an infrastructure (for example, a vending machine, a self-service navigation console of a supermarket, a self-service cash register device, or a self-service ordering machine) in a daily life scenario, a device in a large sports and music venue, and the like. For example, the access point and the station may be devices used in an internet of vehicles, an internet of things node, a sensor, or the like in an internet of things, a smart camera, a smart remote control, and a smart water or electricity meter in a smart home, a sensor in a smart city, or the like.

Although embodiments of this application are mainly described by using a WLAN as an example, especially a network applied to IEEE 802.11 series standards, for example, a system that supports Wi-Fi 7 and may also be referred to as an extremely high throughput (extremely high throughput, EHT) system, or a system that supports Wi-Fi 8 and may also be referred to as an ultra high reliability (ultra high reliability, UHR) system or an ultra high reliability and throughput (ultra high reliability and throughput, UHRT) system. Persons skilled in the art easily understand that various aspects in embodiments of this application may be extended to other networks that use various standards or protocols, for example, Bluetooth (Bluetooth), a high-performance radio LAN (high-performance radio LAN, HIPERLAN) (a wireless standard similar to the IEEE 802.11 standard, mainly used in Europe) and a wide area network (WAN) or another network that is known or developed in future.

A multi-link device (multi-link device, MLD) is a device that has a plurality of stations (for example, an AP or a non-AP STA) respectively operating on different frequency bands or channels. When a spacing between channels on which two stations in a multi-link device operate is large enough, the two stations may not interfere with each other, and may operate independently. If transmission on a station concurrent with reception on another station is supported between any two stations, it may be considered that a simultaneous transmit and receive (simultaneous transmitting and receiving, STR) capability is supported between the two stations; otherwise, it may be considered that a non-simultaneous transmit and receive (non-simultaneous transmitting and receiving, NSTR) capability is supported between the two stations. The multi-link device includes a plurality of affiliated stations. The affiliated station may be a physical station or a logical station, and each station may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, a non-AP multi-link device (non-AP multi-link device, non-AP MLD), or the like. The multi-link device (which may be a non-AP MLD or an AP MLD herein) is a communication apparatus having a wireless communication function. The communication apparatus may be an entire device, or may be a chip, a processing system, or the like installed in the entire device. The device in which the chip or the processing system is installed may implement the method and function in embodiments of this application under control of the chip or the processing system.

The multi-link device MLD may implement wireless communication in compliance with 802.11 series protocols, for example, in compliance with an extremely high throughput (Extremely High Throughput, EHT) protocol, or in compliance with an 802.11be-based or 802.11be-compatible protocol, thereby implementing communication with another device. Certainly, the another device may be a multi-link device or may not be a multi-link device.

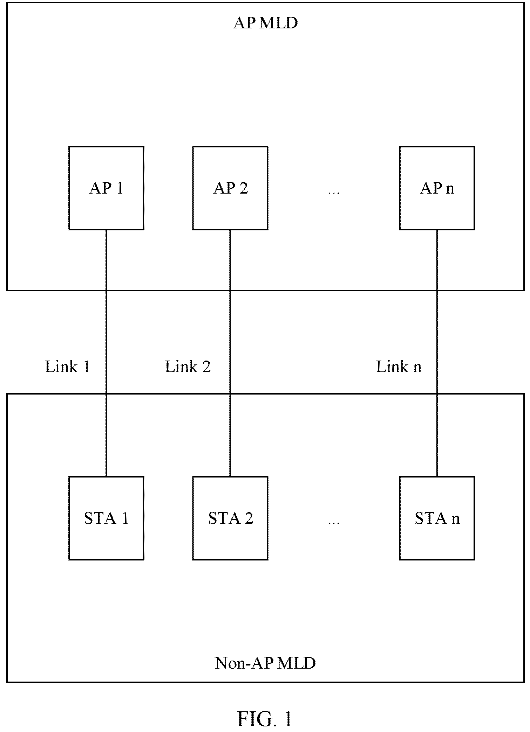

FIG. 1 is a diagram of an architecture of a communication system according to an embodiment of this application. As shown in FIG. 1, an AP MLD includes an AP 1, an AP 2, ..., and an AP n. A non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship. A frequency band on which a multi-link device (including an AP MLD and a non-AP MLD) operates may include but is not limited to sub 1 GHz, 2.4 GHz, 5 GHz, 6 GHz, and high-frequency 60 GHz. For example, the method provided in embodiments of this application is applicable to, but is not limited to single-user uplink/downlink transmission, multi-user uplink/downlink transmission, vehicle-to-everything (vehicle-to-everything, V2X, where X may represent anything) communication, and device-to-device (device-to-device, D2D) communication. For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

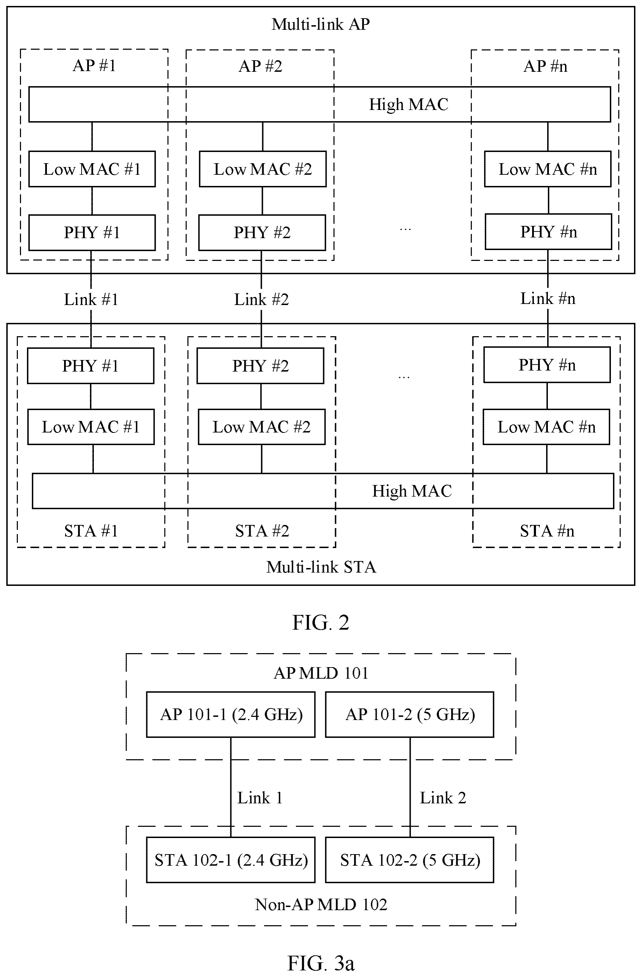

FIG. 2 is a diagram of a manner of connection between a multi-link AP and a multi-link STA according to an embodiment of this application. The 802.11 standard focuses on an 802.11 physical layer (physical layer, PHY) part and a medium access control (medium access control, MAC) layer part in a multi-link device. Therefore, FIG. 2 shows only a PHY layer and a MAC layer as an example.

As shown in FIG. 2, a multi-link device (for example, a multi-link AP and a multi-link STA) may include a physical layer (physical layer, PHY) (a PHY #1, a PHY #2, and a PHY #n shown in FIG. 2) and a medium access control (medium access control, MAC) layer. The physical layer may be configured to process a physical layer signal, and the MAC layer may be configured to process a MAC layer signal. Further, the MAC layer may be further divided into a high MAC (high-MAC) layer (high MAC shown in FIG. 2) and a plurality of low MAC (low-MAC) layers (low MAC #1, low MAC #2 to low MAC #n shown in FIG. 2). As shown in FIG. 2, a plurality of APs included in the multi-link AP are independent of each other at low MAC layers and PHYs, and share a high MAC layer. A plurality of STAs included in the multi-link STA are independent of each other at low MAC layers and PHYs, and share a high MAC layer. The high MAC layer is separately connected to a plurality of low MAC layers, in other words, the high MAC layer is shared by a plurality of links. For example, the high MAC layer mainly completes operations such as allocation, encryption, and decryption on a sequence number (sequence number, SN) and a packet number (packet number, PN) of a MAC service data unit (MAC service data unit, MSDU). For example, the low MAC layer mainly completes operations such as assembling of a MAC protocol data unit (MAC protocol data unit, MPDU) on each link, channel access, and packet sending and receiving acknowledgment.

In FIG. 2, the PHY #1 layer, the low MAC #1 layer, and the high MAC layer in the multi-link AP may be considered as an AP #1, the PHY #2 layer, the low MAC #2 layer, and the high MAC layer may be considered as an AP #2, ..., and the PHY #n layer, the low MAC #n layer, and the high MAC layer may be considered as an AP #n. That is, it may be understood that the multi-link AP includes n AP entities. In the multi-link STA, the situation is similar, to be specific, the high MAC layer in the multi-link STA is also shared by a plurality of links; and the PHY #1 layer, the low MAC #1 layer, and the high MAC layer are considered as a STA #1, the PHY #2 layer, the low MAC #2 layer, and the high MAC layer are considered as a STA #2, ..., and the PHY #n layer, the low MAC #n layer, and the high MAC layer are considered as a STA #n. That is, it may be understood that the multi-link STA includes n STA entities. As shown in FIG. 2, the PHY #1 of the AP #1 in the multi-link AP and the PHY #1 of the STA #1 in the multi-link STA operate on a same channel, and therefore the AP #1 in the multi-link AP and the STA #1 in the multi-link STA communicate with each other on a link (a link #1 shown in FIG. 2). The PHY #2 of the AP #2 in the multi-link AP and the PHY #2 of the STA #2 in the multi-link STA operate on another same channel, and therefore the AP #2 in the multi-link AP and the STA #2 in the multi-link STA communicate with each other on a link (a link #2 shown in FIG. 2). The PHY #n of the AP #n in the multi-link AP and the PHY #n of the STA #n in the multi-link STA operate on another same channel, and therefore the AP #n in the multi-link AP and the STA #n in the multi-link STA communicate with each other on a link (a link #n shown in FIG. 2).

For example, the high MAC layer or the low MAC layer may be implemented by one processor in a chip system of the multi-link device, or may be implemented by different software processing modules in a chip system. Examples are not enumerated in embodiments of this application. It may be understood that, FIG. 2 may be understood that division into functional modules is implemented on the multi-link device. The modules shown in FIG. 2 may be implemented in a form of hardware, or may be implemented in a form of a software functional module. The PHY layers and the MAC layers shown in FIG. 2 may be understood as logical function division, and another division manner may be used during actual implementation. n shown in FIG. 2 may be equal to 1, or n is an integer greater than 1, or the like.

The high MAC layer may also be referred to as an MLD upper MAC sublayer (MLD upper MAC sublayer), and the low MAC layer may also be referred to as an MLD lower MAC sublayer (MLD lower MAC sublayer). For a multi-link device, in addition to a MAC address (MAC address) of each link of each multi-link device, the multi-link device further has an MLD MAC address (MLD MAC address). The architecture shown in FIG. 2 is used as an example. The high MAC layer may be uniquely identified by a MAC address of the corresponding MLD, and the low MAC layer may be uniquely identified by a MAC address of a corresponding link. For example, low MAC#1 and low MAC#2 may respectively correspond to MAC addresses of respective corresponding links.

For example, the multi-link device in embodiments of this application may be a single-antenna device, or may be a multi-antenna device. For example, the multi-link device may be a device with more than two antennas. A quantity of antennas included in the multi-link device is not limited in embodiments of this application.

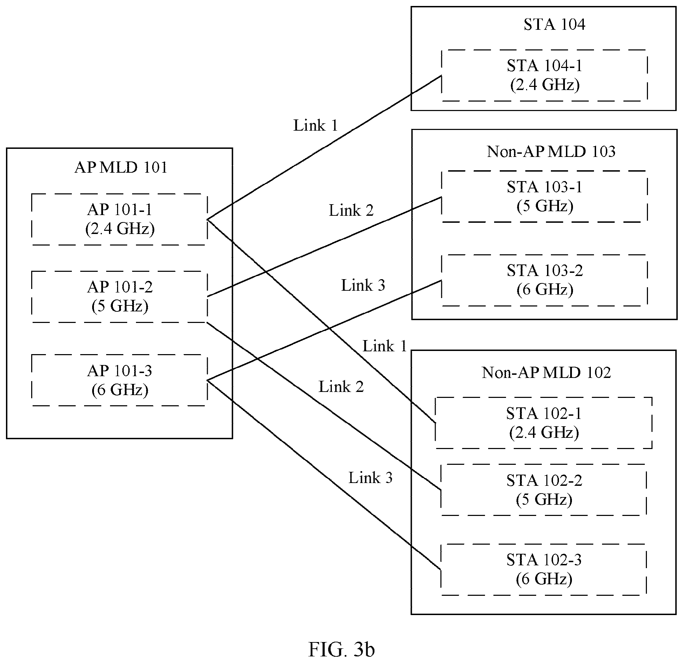

A frequency band on which the multi-link device operates may include but is not limited to sub 1 GHz, 2.4 GHz, 5 GHz, 6 GHz, and high-frequency 60 GHz. FIG. 3a and FIG. 3b are two diagrams of communication between a multi-link device and another device in a wireless local area network through a plurality of links.

FIG. 3a shows a scenario in which an AP MLD 101 communicates with a non-AP MLD 102. The AP MLD 101 includes an affiliated AP 101-1 and an affiliated AP 101-2, the non-AP MLD 102 includes an affiliated STA 102-1 and an affiliated STA 102-2, and the AP MLD 101 and the non-AP MLD 102 communicate in parallel through a link 1 and a link 2.

For example, FIG. 3b shows a scenario in which an AP MLD 101 communicates with a non-AP MLD 102, a non-AP MLD 103, and a STA 104. The AP MLD 101 includes an affiliated AP 101-1 to an affiliated AP 101-3, the non-AP MLD 102 includes three affiliated stations: a STA 102-1, a STA 102-2, and a STA 102-3, the non-AP MLD 103 includes two affiliated stations: a STA 103-1 and a STA 103-2, and the STA 104 is a single-link device, and includes a STA 104-1. The AP MLD 101 may separately communicate with the non-AP MLD 102 through a link 1, a link 2, and a link 3, communicate with the non-AP MLD 103 through the link 2 and the link 3, and communicate with the STA 104 through the link 1. In an example, the STA 104 operates on a 2.4 GHz frequency band; in the non-AP MLD 103, the STA 103-1 operates on a 5 GHz frequency band, and the STA 103-2 operates on a 6 GHz frequency band; and in the non-AP MLD 102, the STA 102-1 operates on a 2.4 GHz frequency band, the STA 102-2 operates on a 5 GHz frequency band, and the STA 102-3 operates on a 6 GHz frequency band. The AP 101-1 operating on a 2.4 GHz frequency band in the AP MLD 101 may perform uplink or downlink data transmission with the STA 104 and the STA 102-1 in the non-AP MLD 102 through the link 1. The AP 101-2 operating on a 5 GHz frequency band in the AP MLD 101 may perform, through the link 2, uplink or downlink data transmission with the STA 103-1 operating on the 5 GHz frequency band in the non-AP MLD 103, and may also perform, through the link 2, uplink or downlink data transmission with the STA 102-2 operating on the 5 GHz frequency band in the non-AP MLD 102. The AP 101-3 operating on a 6 GHz frequency band in the AP MLD 101 may perform, through the link 3, uplink or downlink data transmission with the STA 102-3 operating on the 6 GHz frequency band in the non-AP MLD 102, and may also perform uplink or downlink data transmission with the STA 103-2 in the non-AP MLD through the link 3.

FIG. 3a only shows that the AP MLD supports two frequency bands, and FIG. 3b shows only an example in which the AP MLD 101 supports three frequency bands (2.4 GHz, 5 GHz, and 6 GHz), each frequency band corresponds to one link, and the AP MLD 101 may operate on one or more of the link 1, the link 2, or the link 3 for illustration. On an AP side or a STA side, the link herein may also be understood as a station operating on the link. In an actual application, the AP MLD and the non-AP MLD may further support more or fewer frequency bands, that is, the AP MLD and the non-AP MLD may operate on more links or fewer links. This is not limited in embodiments of this application. FIG. 3a and FIG. 3b are merely simple diagrams, and do not constitute any limitation on the protection scope of embodiments of this application.

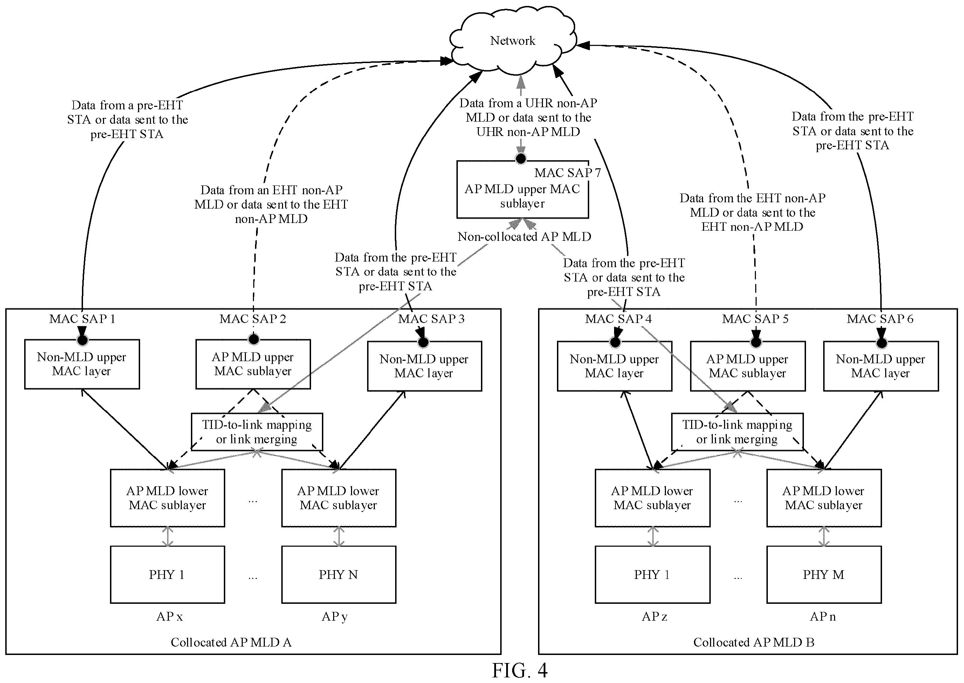

FIG. 4 is a diagram of an architecture of a communication system according to an embodiment of this application. The architecture shown in FIG. 4 includes a UHR system, an EHT system, and a system earlier than the EHT (for example, referred to as pre-EHT). It may be understood that lines, dashed lines, or the like with different thicknesses shown in FIG. 4 are used to represent different transmission paths. Generally, interfaces between an upper layer (also referred to as a higher layer, such as a radio resource control (RRC) layer) and a MAC layer may be referred to as MAC service access points (service access points, SAPs) (a MAC SAP 1 to a MAC SAP 7 represented by seven black dots in FIG. 4). A MAC address can uniquely identify a MAC SAP. It may be understood that a representation manner (for example, representation with a black dot) and a representation location (for example, a location of the black dot) of the MAC SAP shown in FIG. 4 are merely examples, and should not be construed as a limitation on embodiments of this application.

A non-collocated AP MLD may also be referred to as a logical AP MLD (logical AP MLD), and a collocated AP MLD may also be referred to as a physical AP MLD (physical AP MLD). For ease of description, the following uses a non-collocated AP MLD and a collocated AP MLD as examples to describe the methods provided in embodiments of this application.

In an example, because data of a pre-EHT STA is associated with an affiliated AP, all data related to the pre-EHT STA needs to be received and sent through a MAC SAP (the MAC SAP 1, the MAC SAP 3, the MAC SAP 4, or the MAC SAP 6 shown in FIG. 4) of the corresponding affiliated AP. As shown in FIG. 4, for data from the pre-EHT STA or data sent to the pre-EHT STA, the AP may process the data by using a non-MLD high MAC layer (the MAC SAP 1, the MAC SAP 3, the MAC SAP 4, or MAC SAP 6 shown in FIG. 4).

In another example, because data of an EHT non-AP MLD is associated with a collocated AP MLD, all data related to the EHT non-AP MLD needs to be received and sent through a MAC SAP (the MAC SAP 2 and the MAC SAP 5 shown in FIG. 4) of the corresponding collocated AP MLD. As shown in FIG. 4, for data from the EHT non-AP MLD or data sent to the EHT non-AP MLD, the collocated AP MLD may perform data processing by using an AP MLD upper MAC sublayer (the MAC SAP 2 or the MAC SAP 5 shown in FIG. 4) and then perform data processing by using an AP MLD lower MAC sublayer. Each AP MLD lower MAC sublayer may correspond to one PHY. For example, for a collocated AP MLD A, all AP MLD lower MAC sublayers sequentially correspond to a PHY 1 (which may also be referred to as a link 1 or a PHY corresponding to the link 1), ..., and a PHY N (which may also be referred to as a link N or a PHY corresponding to the link N). For a collocated AP MLD B, all AP MLD lower MAC sublayers may sequentially correspond to a PHY 1 (which may also be referred to as a link 1 or a PHY corresponding to the link 1), ..., and a PHY M (which also referred to as a link M or a PHY corresponding to the link M). A and B are used to distinguish different collocated AP MLDs, and both M and N are positive integers.

In still another example, because data of a UHR non-AP MLD is associated with a non-collocated AP MLD, all data related to the UHR non-AP MLD needs to be received and sent through a MAC SAP (the MAC SAP 7 shown in FIG. 4) of the corresponding non-collocated AP MLD. As shown in FIG. 4, for data from the UHR non-AP MLD or data sent to the UHR non-AP MLD, the non-collocated AP MLD processes the data by using an AP MLD upper MAC sublayer, and then forwards processed data through the MAC SAP 7 or forwards the processed data to a corresponding collocated AP MLD. The collocated AP MLD delivers the data to a module related to TID-to-link mapping or link merging.

For example, division into functions of a non-collocated AP MLD upper MAC sublayer and a non-collocated AP MLD lower MAC sublayer may depend on whether a traffic identifier (traffic identifier, TID) is allowed to be mapped to links of different collocated AP MLDs. For example, when a traffic identifier (traffic identifier, TID) is allowed to be mapped to links of different collocated AP MLDs, a block acknowledgment (block ACK, BA) session of the TID needs to be maintained at the non-collocated AP MLD upper MAC sublayer, and the session may be refreshed based on BA information fed back by the corresponding collocated AP MLD.

It may be understood that a functional block of the AP MLD upper MAC sublayer may be placed in a collocated AP MLD, or may be placed in an access point controller. A manner of setting the non-collocated AP MLD upper MAC sublayer is not limited in embodiments of this application. The AP MLD upper MAC sublayer and the AP MLD lower MAC sublayer may communicate with each other by using a network cable or another technology. For example, a plurality of collocated AP MLDs affiliated with a non-collocated AP MLD may not be located in a same device.

For example, a non-collocated AP MLD may be understood as an AP MLD including a plurality of collocated AP MLDs. Alternatively, the non-collocated AP MLD may be understood as a device configured to centrally or uniformly manage (or control) the plurality of collocated AP MLDs.

A relationship between a MAC address of an MLD and a MAC address of a link affiliated with the MLD shown in FIG. 2 is used as an example. There is a similar relationship between a non-collocated AP MLD and a collocated AP MLD. For example, each non-collocated AP MLD has a non-collocated MLD MAC address (a non-collocated AP MLD upper MAC sublayer shown in FIG. 4), an MLD MAC address of a collocated AP MLD affiliated with the non-collocated AP MLD, and a MAC address of a link affiliated with the collocated AP MLD. It may be understood that the non-collocated MLD MAC address may be understood as a MAC address of an AP MLD upper MAC sublayer shown in FIG. 4 (for example, the MAC address of the AP MLD upper MAC sublayer may identify the MAC SAP 7). n collocated AP MLDs affiliated with a non-collocated AP MLD may also mean that the non-collocated AP MLD includes the n collocated AP MLDs or the non-collocated AP MLD corresponds to the n collocated AP MLDs.

It may be understood that there may be different descriptions of the relationship between the non-collocated AP MLD and the collocated AP MLD as development of standards. Therefore, the descriptions of the relationship between the non-collocated AP MLD and the collocated AP MLD are not limited in embodiments of this application.

In the foregoing embodiments of this application, the first communication apparatus may be an AP, and the second communication apparatus may be a STA; or the first communication apparatus may be a STA, and the second communication apparatus may be an AP. Alternatively, in a possible implementation, the first communication apparatus may be a non-collocated AP MLD, and the second communication apparatus may be an affiliated AP of a collocated AP MLD affiliated with the non-collocated AP MLD.

A non-collocated AP MLD includes a plurality of collocated AP MLDs, and link identifiers (link ID) of the collocated AP MLDs may be the same. Therefore, when a UHR non-AP MLD is associated with the non-collocated AP MLD and establishes a link with a specific collocated AP MLD, it cannot be learned of, by using only a link identifier, the collocated AP MLD with which the UHR non-AP MLD requests to establish the link. In an example, for different non-collocated AP MLDs, IDs of collocated AP MLDs may be the same. In another example, for different collocated AP MLDs, link IDs may also be the same. Because the non-collocated AP MLD not only includes a collocated AP MLD affiliated with the non-collocated AP MLD, but also includes a plurality of links affiliated with the collocated AP MLD, when a multi-link element includes only related identifier information of the collocated AP MLD, the collocated AP MLD cannot be effectively identified.

In view of this, embodiments of this application provide a multi-link communication method, to quickly and effectively identify a collocated AP MLD. According to the method provided in embodiments of this application, when establishing a link across non-collocated AP MLDs, a non-AP MLD can effectively distinguish different collocated AP MLDs affiliated with a same non-collocated AP MLD, and can also effectively distinguish different non-collocated AP MLDs. When the UHR non-AP MLD needs to establish a link with a specific collocated AP MLD, a non-collocated AP MLD can quickly and effectively learn of, by using the collocated AP MLD corresponding to the link requested to be established, the collocated AP MLD with which the UHR non-AP MLD requests to establish the link. For example, in embodiments of this application, the UHR non-AP MLD may be associated with a non-collocated AP MLD, so that the UHR non-AP MLD can effectively distinguish, by indicating an MLD address of the non-collocated AP MLD, a non-collocated AP MLD associated with the UHR non-AP MLD.

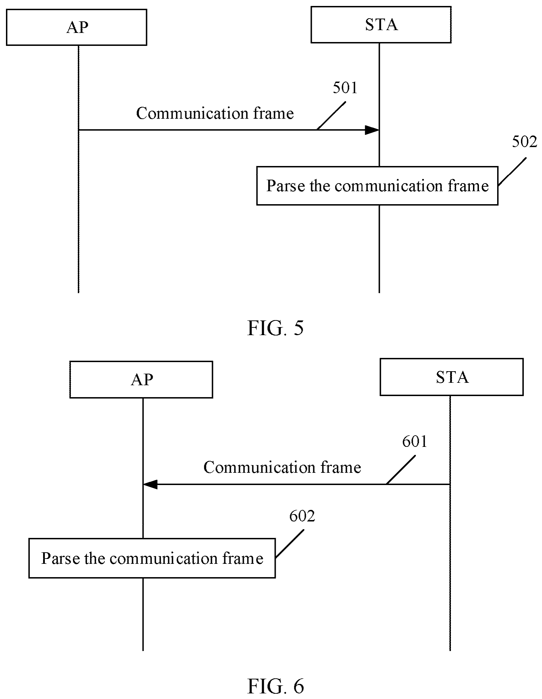

FIG. 5 is a schematic flowchart of a multi-link communication method according to an embodiment of this application. For descriptions of a non-collocated AP MLD, a collocated AP MLD, a non-AP MLD, and the like in the method, refer to the foregoing descriptions. Details are not described in the method shown in FIG. 5. It may be understood that, although a relay node is not used in the method described below, persons skilled in the art may learn that when a sending party and a receiving party communicate with each other, a forwarding operation may be performed via the relay node. As shown in FIG. 5, the method includes the following steps.

501: An AP sends a communication frame, and correspondingly, a STA receives the communication frame.

The AP may be an AP that is in a collocated AP MLD affiliated with a non-collocated AP MLD and that is affiliated with the collocated AP MLD, and the AP may also be referred to as an affiliated AP (affiliated AP).

Optionally, before sending the communication frame, the AP may further obtain the communication frame. A manner in which the AP obtains the communication frame may be that the AP itself generates the communication frame, or the AP obtains the communication frame from the collocated AP MLD or the non-collocated AP MLD. It may be understood that, it may be seen from the system architecture shown in FIG. 4 that different collocated AP MLDs may have different software modules (for example, MAC layers and PHYs), and different APs in a same collocated AP MLD may also have different software modules (for example, different MAC layers and PHYs). Therefore, it may be understood that the communication frame is generated by the software module. Alternatively, in specific implementation, different APs in a collocated AP MLD may share a same processor. In this case, it may be understood that the communication frame is generated by the processor. Alternatively, when a non-collocated AP MLD upper MAC sublayer is independently located in a controller, the controller may generate the communication frame. After generating the communication frame, the controller may send the communication frame to the AP.

In an example, the communication frame may be generated by the AP. For example, the communication frame may be a management frame after a link is established between the AP and the STA, for example, a channel switching announcement.

In another example, the communication frame may be generated by the collocated AP MLD with which the AP is affiliated. In still another example, the communication frame may be generated by the non-collocated AP MLD with which the collocated AP MLD with the affiliated AP is affiliated. For example, the communication frame may be an association response frame, a reassociation response frame, or a multi-link reconfiguration response frame. For another example, when a related operation across non-collocated AP MLDs is used, the communication frame may be a multi-link reconfiguration response frame generated by the non-collocated AP MLD.

In addition to the communication frame listed above, the communication frame shown in this embodiment of this application may be a beacon frame. For example, the beacon frame may be used for discovery of a neighbor collocated AP MLD, selection of an associated link, or the like. Alternatively, the communication frame may be a probe request frame, a probe response frame, or the like. However, as long as a multi-link element included in the communication frame complies with characteristics of a multi-link element described below, the communication frame falls within the protection scope of embodiments of this application.

502: The STA parses the communication frame.

For example, the STA may obtain, by parsing the communication frame, information related to channel switching. For another example, the STA may obtain, by parsing the communication frame, information related to link association, information related to link reassociation, or the like. For information obtained by parsing the communication frame by the STA, refer to descriptions of a multi-link element in the communication frame described below, refer to descriptions of a TID-to-link mapping element in the communication frame described below, or refer to descriptions of a reduced neighbor report element described below. Details are not listed in embodiments of this application.

FIG. 6 is a schematic flowchart of another multi-link communication method according to an embodiment of this application. For descriptions of a non-collocated AP MLD, a collocated AP MLD, a non-AP MLD, and the like in the method, refer to the foregoing descriptions. Details are not described in the method shown in FIG. 6. It may be understood that, although a relay node is not used in the method described below, persons skilled in the art may learn that when a sending party and a receiving party communicate with each other, a forwarding operation may be performed via the relay node. As shown in FIG. 6, the method includes the following steps.

601: A STA sends a communication frame, and correspondingly, an AP receives the communication frame.

The STA may be a STA affiliated with a non-AP MLD, and the STA may also be referred to as an affiliated STA (affiliated STA).

Optionally, before sending the communication frame, the STA may further obtain the communication frame. A manner in which the STA obtains the communication frame may be that the STA itself generates the communication frame, or the STA obtains the communication frame from the non-AP MLD.

In an example, the communication frame may be generated by the STA. For example, the communication frame may be a management frame after a link is established between the STA and the AP.

In another example, the communication frame may be generated by the non-AP MLD. For example, the communication frame may be an association request frame, a reassociation request frame, a multi-link reconfiguration request frame, or the like.

602: The AP parses the communication frame.

For example, the AP may obtain, by parsing the communication frame, information related to link association, information related to link reassociation, or the like. Details are not listed. For information obtained by parsing the communication frame by the STA, refer to descriptions of a multi-link element in the communication frame described below, or refer to descriptions of a TID-to-link mapping element in the communication frame described below. Details are not listed in embodiments of this application.

The following describes the communication frame described in embodiments of this application.

The communication frame may include n multi-link elements, and each multi-link element corresponds to one collocated AP MLD. For example, when the communication frame relates to related information of a plurality of collocated AP MLDs affiliated with one non-collocated AP MLD, the communication frame may include n multi-link elements, and each multi-link element corresponds to one collocated AP MLD.

Optionally, the communication frame may further include m multi-link elements, and non-collocated AP MLDs corresponding to the m multi-link elements may be different from non-collocated AP MLDs corresponding to the n multi-link elements. Both m and n are integers greater than or equal to 1. For example, when the communication frame relates to related information of a plurality of non-collocated AP MLDs, the communication frame may include m multi-link elements and n multi-link elements, non-collocated AP MLDs corresponding to the n multi-link elements are different from non-collocated AP MLDs corresponding to the m multi-link elements, and each multi-link element corresponds to one collocated AP MLD. A quantity of multi-link elements may be determined based on an actual situation. Details are not listed in embodiments of this application. For ease of description, the following uses a multi-link element as an example to describe the communication frame, but a quantity of multi-link elements described below should not be understood as a limitation on embodiments of this application.

In a possible implementation, the multi-link element includes identifier information of a non-collocated AP MLD and identifier information of a collocated AP MLD.

In a possible implementation, the identifier information of the non-collocated AP MLD includes at least one of the following: an ID of the non-collocated AP MLD or an MLD MAC address of the non-collocated AP MLD; and the identifier information of the collocated AP MLD includes at least one of the following: an ID of the collocated AP MLD or an MLD MAC address of the collocated AP MLD. It may be understood that information described in embodiments of this application may be present in a form of a field, or may be present in a form of an element or a subelement. For ease of description, the following uses the following representation manners as examples to describe the multi-link element provided in embodiments of this application: A non-collocated AP MLD MAC address field identifies an MLD MAC address of a non-collocated AP MLD, a non-collocated AP MLD ID field identifies an ID of a non-collocated AP MLD, a collocated AP MLD ID field identifies an ID of a collocated AP MLD, and a collocated AP MLD MAC address field identifies an MLD MAC address of a collocated AP MLD.

A non-collocated AP MLD MAC address field may identify an MLD MAC address of a non-collocated AP MLD. For example, the non-collocated AP MLD MAC address field may identify an MLD MAC address of a non-collocated AP MLD with which a collocated AP MLD is affiliated. When the non-collocated AP MLD MAC address field cannot uniquely identify a non-collocated AP MLD, the multi-link element may further include a non-collocated AP MLD ID field, and the non-collocated AP MLD ID field may identify an ID of a non-collocated AP MLD. For example, the ID of the non-collocated AP MLD may be set by the non-collocated AP MLD, or may be set by an operator and the like (for reference only). For example, a UHR non-AP MLD is associated with a non-collocated AP MLD, and a pairwise transient key (pairwise transient key, PTK) of the UHR non-AP MLD is derived based on an MLD address of the non-collocated AP MLD. Because there may be a plurality of non-collocated AP MLDs in an extended service set (extended service set, ESS), the multi-link element may include the non-collocated AP MLD ID field. For example, when only at most one non-collocated AP MLD is allowed in an ESS, the non-collocated AP MLD ID may also be 1 bit, to indicate whether a current collocated AP MLD is affiliated with the non-collocated AP MLD.

For a collocated AP MLD ID field, in a possible implementation, for different collocated AP MLDs affiliated with a same non-collocated AP MLD, an ID, of an AP MLD, identified by an AP MLD ID field (namely, an AP MLD ID field that has been present in a multi-link element before this solution) may be understood as an ID set by the AP MLD. Therefore, for the same non-collocated AP MLD, the ID of the AP MLD may not be unique. Therefore, it is complex to identify a collocated AP MLD by using only the AP MLD ID field. Because the collocated AP MLD may not be uniquely identified by using the AP MLD ID field, a collocated AP MLD ID field is further described in embodiments of this application. The collocated AP MLD ID field may identify an ID of a collocated AP MLD. For example, the ID of the collocated AP MLD may be set by a non-collocated AP MLD. The collocated AP MLD ID field may be used for discovery of a neighbor collocated AP MLD, a cross-collocated AP MLD operation, and the like. Details are not listed one by one in embodiments of this application. In this embodiment of this application, the collocated AP MLD ID field and a collocated AP MLD MAC address field may be considered as different fields. For example, a collocated AP MLD ID field may be present in both a communication frame sent by an AP and a communication frame sent by a STA (only for example, whether the collocated AP MLD ID field is present needs to be determined based on a role or function of the communication frame). Generally, it may be understood that an MLD MAC address of a collocated AP MLD is set before delivery.

For a collocated AP MLD ID field, in another possible implementation, the collocated AP MLD ID field may be set to a collocated AP MLD MAC address. For example, for a communication frame sent by an AP, a collocated AP MLD ID field may reuse an MLD MAC address field that has been present before this solution. To be specific, when a multi-link element is carried in a communication frame sent by an affiliated AP, an MLD MAC address of a corresponding collocated AP MLD may be carried in an MLD address field in the multi-link element. However, for a communication frame sent by a STA, a collocated AP MLD ID field carries an MLD MAC address of a collocated AP MLD corresponding to a link (namely, a link indicated by a link ID field in a multi-link element). That is, in this implementation, the collocated AP MLD ID field may be present in the multi-link element of the communication frame sent by the STA side.

For a collocated AP MLD ID field, in still another possible implementation, the collocated AP MLD ID field and an AP MLD ID field may also be understood as a same field, and the collocated AP MLD ID field reuses the AP MLD ID field that has been present before this solution. In this case, because the AP MLD ID field is set by each collocated AP MLD (that is, IDs set by different collocated AP MLDs affiliated with a non-collocated AP MLD may be the same), it may be complex for a communication apparatus that receives a communication frame (including a multi-link element) to parse a mapping between a collocated AP MLD ID field and a collocated AP MLD MAC address field. The reason for complexity may be as follows: A non-AP MLD needs to deduce, by combining a BSSID and an AP MLD ID field in a reduced neighbor report element in a beacon frame of a current collocated AP MLD with a BSSID in a reduced neighbor report element in a beacon frame of a neighbor collocated AP MLD and an MLD MAC address field in the multi-link element, an MLD address of a collocated AP MLD corresponding to the AP MLD ID field.

For example, this multi-link element may include a non-collocated AP MLD MAC address field and a collocated AP MLD ID field. For example, a multi-link element may include a non-collocated AP MLD ID field and a collocated AP MLD ID field. For example, for a communication frame sent by a STA, a multi-link element may include a non-AP MLD MAC address field, a non-collocated AP MLD ID field (or a non-collocated AP MLD MAC address field), and a collocated AP MLD ID field (or a collocated AP MLD MAC address field). For example, for a communication frame sent by an AP, a multi-link element may include a collocated AP MLD MAC address field, an AP MLD ID field (for example, set by an AP MLD), a collocated AP MLD ID field (for example, set by a non-collocated AP MLD), and a non-collocated AP MLD ID field (or an MLD MAC address of a non-collocated AP MLD).

For example, a multi-link element of a communication frame sent by an AP may include an MLD MAC address of a collocated AP MLD with which the AP is affiliated (for example, a collocated AP MLD MAC address field), an AP MLD ID (an ID allocated by the collocated AP MLD) field, a collocated AP MLD ID (an ID allocated by a non-collocated AP MLD) field, an MLD MAC address of a non-collocated AP MLD with which the collocated AP MLD with the affiliated AP is affiliated (for example, a non-collocated AP MLD MAC address field), and a non-collocated AP MLD ID field. It may be understood that both the AP MLD ID field and the collocated AP MLD ID field may be present in the multi-link element, or the multi-link element may include the AP MLD ID field or the collocated AP MLD ID field. For example, a multi-link element of a communication frame sent by a STA may include an MLD MAC address of a non-AP MLD with which the STA is affiliated (for example, an MLD MAC address), a collocated AP MLD ID field, a non-collocated AP MLD MAC address field, and a non-collocated AP MLD ID field. It may be understood that both the non-collocated AP MLD MAC address field and the non-collocated AP MLD ID field may be present in the multi-link element, or the multi-link element includes the non-collocated AP MLD MAC address field or the non-collocated AP MLD ID field.

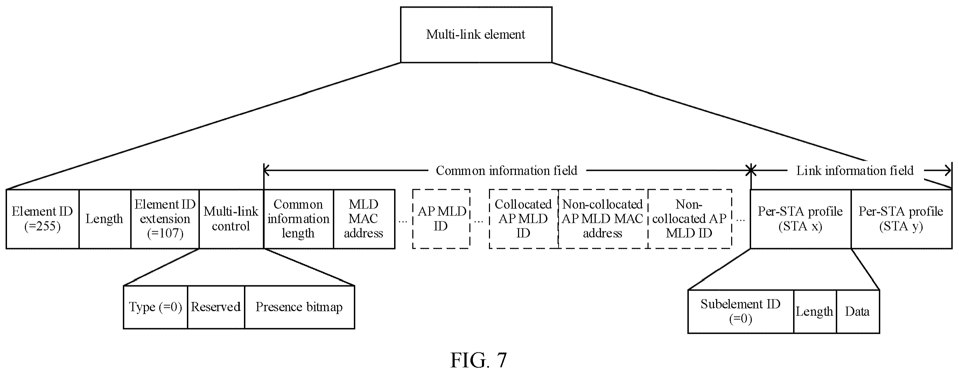

The foregoing listed multi-link element may include the following fields: the collocated AP MLD ID field, the collocated AP MLD MAC address field, the non-collocated AP MLD ID field, and the non-collocated AP MLD MAC address field; and the field specifically included in the multi-link element may be defined in a protocol, or the field included in the multi-link element may be indicated by a presence bitmap (for example, a presence bitmap shown in FIG. 7 below).

For example, a multi-link element includes a multi-link control (multi-link control) field and a common information (common info) field. The multi-link control field includes a presence bitmap (presence bitmap), and the presence bitmap indicates whether related information in the common information field is present or not. For example, the common information field may include at least one of the following: an MLD MAC address (a MAC address of an MLD that sends the multi-link element) field, an AP MLD ID field, a collocated AP MLD ID field, a non-collocated AP MLD MAC address field, or a non-collocated AP MLD ID field. FIG. 7 is a diagram of a multi-link element according to this embodiment of this application. As shown in FIG. 7, the multi-link element may include an element ID (element ID) (for example, element ID=255), a length (length), an element ID extension (element ID extension) (for example, element ID extension=107), multi-link control, a common information field (common info field), and a link information field (link info field). For example, the multi-link control field may include a type (type) (for example, type=0), reserved (reserved), and a presence bitmap. For example, the common information field may include at least one of an MLD MAC address field, an AP MLD ID field, a collocated AP MLD ID field, a non-collocated AP MLD MAC address field, a non-collocated AP MLD ID field, or a common information length (common info length) field. For example, the link information field may include one or more per-STA profiles (per-STA profiles), and the per-STA profile may include a subelement ID (subelement ID), a length, and data (data). It may be understood that a dashed line shown in FIG. 7 indicates that any one or more of the AP MLD ID field, the collocated AP MLD ID field, the non-collocated AP MLD MAC address field, and the non-collocated AP MLD ID field may not be present in the multi-link element. A sequence of information shown in FIG. 7 is not limited in embodiments of this application. It may be understood that a manner of division between fields, subelements, or elements shown in this embodiment of this application is merely an example. During specific implementation, there may be another division manner for different information in a communication frame. This is not limited in embodiments of this application.

The MLD MAC address field identifies an MLD MAC address of an MLD that sends the communication frame, for example, an MLD MAC address of a non-AP MLD or an MLD MAC address of a collocated AP MLD. Therefore, in either the method shown in FIG. 5 or the method shown in FIG. 6, the communication frame includes the MLD MAC address field. For example, when the AP sends the communication frame, the MLD MAC address field may be an MLD MAC address of a collocated AP MLD with which the AP is affiliated. For another example, when the STA sends the communication frame, the MLD MAC address field may be an MLD MAC address of an MLD with which the STA is affiliated. Because the MLD MAC address field is always present in the communication frame, the presence bitmap may indicate whether the AP MLD ID field, the collocated AP MLD ID field, the non-collocated AP MLD MAC address field, and the non-collocated AP MLD ID field are present. For example, in the presence bitmap, a first bit may indicate whether the AP MLD ID field is present, a second bit may indicate whether the collocated AP MLD ID field is present, a third bit may indicate whether the non-collocated AP MLD MAC address field is present, and a fourth bit may indicate whether the non-collocated AP MLD ID field is present. It may be understood that the presence bitmap may also be referred to as an existence bitmap. A specific name of the field in the multi-link control is not limited in embodiments of this application.

Whether the AP MLD ID field, the collocated AP MLD ID field, the non-collocated AP MLD MAC address field, and the non-collocated AP MLD ID field described above are present may be determined based on a role or function of the communication frame. In an example, when the communication frame is a beacon frame sent by an AP, in a multi-link element of the beacon frame, an AP MLD ID field and a non-collocated AP MLD MAC address field may be present, and a collocated AP MLD ID field and a non-collocated AP MLD ID field may not be present. In another example, when the communication frame is an association request frame (or a reassociation request frame) sent by a STA, an AP MLD ID field, a non-collocated AP MLD MAC address field, and a collocated AP MLD ID field may be present in a multi-link element in the association request frame. In still another example, when the communication frame is an association response frame (or a reassociation response frame) sent by an AP, a collocated AP MLD ID field may not be present in a multi-link element in the association response frame. In still another example, when the communication frame is a multi-link reconfiguration request frame sent by a STA, an AP MLD ID field, a non-collocated AP MLD MAC address field, and a collocated AP MLD ID field may be present in a multi-link element in the multi-link reconfiguration request frame. In still another example, when the communication frame is a multi-link reconfiguration response frame sent by an AP, a collocated AP MLD ID field may not be present in a multi-link element in the multi-link reconfiguration response frame. It may be understood that the multi-link element described above is merely an example. In an actual application, a multi-link device may determine, based on a specific function or role, whether one or more of the AP MLD ID field, the collocated AP MLD ID field, the non-collocated AP MLD MAC address field, and the non-collocated AP MLD ID field are present in the multi-link element. Therefore, the fields, included in the multi-link element, listed above should not be understood as a limitation on embodiments of this application.

Optionally, a UHR non-AP MLD may select to be associated with a collocated AP MLD (for example, a mode 0) or a non-collocated AP MLD (for example, a mode 1). Therefore, the multi-link element may further include an indication field, and the indication field may indicate an association mode selected by the UHR non-AP MLD. For example, in the mode 0, a PTK may be bound to an MLD MAC address of the collocated AP MLD. In the mode 1, a PTK may be bound to an MLD MAC address of the non-collocated AP MLD. Optionally, the multi-link device may also determine, based on whether the multi-link element in the association request frame carries the collocated AP MLD ID field and the non-collocated AP MLD MAC address field, the association mode selected by the UHR non-AP MLD. For example, when the multi-link element carries the collocated AP MLD ID field and the non-collocated AP MLD MAC address field, it indicates that the association mode selected by the UHR non-AP MLD is the mode 1. For another example, when the multi-link element does not carry the collocated AP MLD ID field and the non-collocated AP MLD MAC address field, it indicates that the association mode selected by the UHR non-AP MLD is the mode 0. Therefore, because the fixed UHR non-AP MLD does not relate to BSS transition, the fixed UHR non-AP MLD may select to be associated with a collocated AP MLD instead of a non-collocated AP MLD.

Because a non-collocated AP MLD may include a plurality of collocated AP MLDs, a collocated AP MLD ID field may be carried in an element related to link information of the collocated AP MLD, or a collocated AP MLD ID field may be carried in an element related to service-related information of the non-collocated AP MLD, to uniquely identify the collocated AP MLD. For example, the related element may include a TID-to-link mapping element and a reduced neighbor report element that are described below. It may be understood that the multi-link element described in this embodiment of this application may include a basic multi-link element.

According to the method provided in embodiments of this application, when crossing non-collocated AP MLDs, a non-AP MLD can quickly and effectively distinguish a collocated AP MLD affiliated with the non-collocated AP MLD, and can also effectively identify different non-collocated AP MLDs.

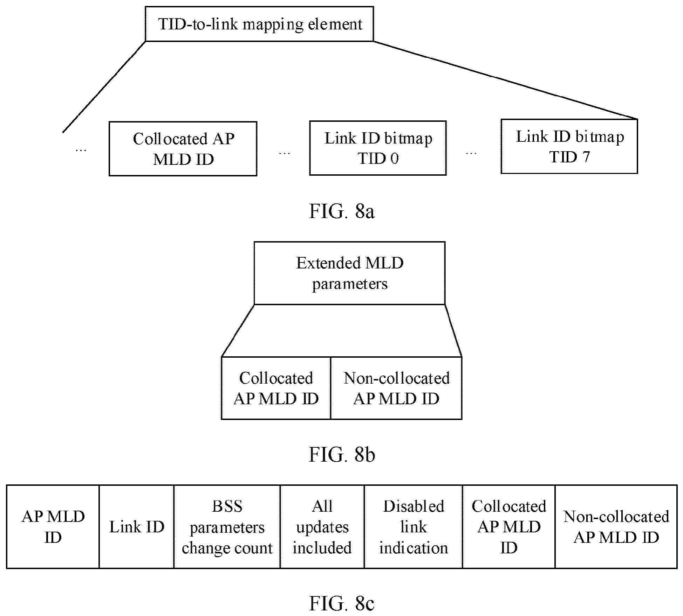

For example, the foregoing related element may include a TID-to-link mapping element (TID-to-link mapping element). FIG. 8a is diagram of a TID-to-link mapping element according to this embodiment of this application. As shown in FIG. 8a, the TID-to-link mapping element may include a collocated AP MLD ID field and a link ID bitmap field corresponding to a TID (or referred to as a link mapping corresponding to the TID (for example, a TID 0 to a TID 7)), and the link ID bitmap field may be associated with the collocated AP MLD ID field. It may be understood that the TID 0 to the TID 7 shown in FIG. 8a are merely examples, and during specific implementation, more TIDs may be further included. The TID-to-link mapping element described in this embodiment of this application and the multi-link element may be included in a same communication frame, or the TID-to-link mapping element and the multi-link element are respectively located in different communication frames. This is not limited in embodiments of this application. It may be understood that the link ID bitmap field described below may be understood as a link ID bitmap TID 0 to a link ID bitmap TID 7.

For a TID-to-link mapping element, in an example, a communication frame may include a TID-to-link mapping element. In this case, the TID-to-link mapping element may include a link ID bitmap field and a collocated AP MLD ID field corresponding to the link ID bitmap field. In another example, a communication frame may include a TID-to-link mapping element (for example, related operations across different collocated AP MLDs). In this case, a plurality of link ID bitmap fields and collocated AP MLD ID fields may be sequentially placed, so that each collocated AP MLD ID field may correspond to one link ID bitmap field. For example, the multi-link device may sequentially learn of, based on a placement sequence of the collocated AP MLD IDs and the link ID bitmap fields, a collocated AP MLD field corresponding to each link ID bitmap field. For example, the TID-to link mapping element may include a collocated AP MLD ID field 1 (for example, corresponding to a collocated AP MLD 1), a link ID bitmap field 1, a collocated AP MLD ID field 2 (for example, corresponding to a collocated AP MLD 2), a link ID bitmap field 2, an AP MLD ID field 3 (for example, corresponding to a collocated AP MLD 3), a link ID bitmap field 3, and the like, and details are not listed herein. In still another example, the communication frame may include a plurality of TID-to-link mapping elements (for example, related operations across different collocated AP MLDs). In this case, each TID-to-link mapping element may correspond to one collocated AP MLD field. Each TID-to-link mapping element may include a collocated AP MLD ID field and a link ID bitmap field corresponding to the collocated AP MLD field. For example, the communication frame includes a TID-to-link mapping element 1 and a TID-to-link mapping element 2. The TID-to-link mapping element 1 may correspond to a collocated AP MLD ID field (for example, corresponding to a collocated AP MLD 1) and a link ID and bitmap field. The TID-to-link mapping element 2 may correspond to a collocated AP MLD ID field (for example, corresponding to a collocated AP MLD 2) and a link ID and bitmap field.

In the foregoing example, an ID of a collocated AP MLD is present in a TID-to-link mapping element in a form of a field. Optionally, an ID of a collocated AP MLD may also be present in the TID-to-link mapping element in a form of a subelement.

For example, the foregoing related element may include a reduced neighbor report element (reduced neighbor report element). Optionally, FIG. 8b is a diagram of a reduced neighbor report element according to this embodiment of this application. As shown in FIG. 8b, the reduced neighbor report element may include an extended MLD parameters (extended MLD parameters) field, and the extended MLD parameters field may include a collocated AP MLD ID field and a non-collocated AP MLD ID field. It may be understood that the foregoing extended MLD parameters field may also be referred to as an enhanced MLD parameters (enhance MLD parameters) field. Optionally, FIG. 8c is a diagram of another reduced neighbor report element according to this embodiment of this application. The reduced neighbor report element includes an MLD parameter, and the MLD parameter may include at least one of the following fields: an AP MLD ID, a link ID, a BSS parameters change count (BSS parameters change count), all updates included (all updates included), a disabled link indication (disabled link indication), a collocated AP MLD ID, or a non-collocated AP MLD ID.

It may be understood that the related embodiment of the collocated AP MLD ID field (the non-collocated AP MLD ID field or the non-collocated AP MLD MAC address field) and the related embodiment of the TID-to-link mapping element shown above may be respectively used as separate embodiments. The multi-link elements in the communication frames shown in FIG. 5 and FIG. 6 each may include a collocated AP MLD ID field (a non-collocated AP MLD ID field or a non-collocated AP MLD MAC address field); or the communication frames shown in FIG. 5 and FIG. 6 each may include a TID-to-link mapping element. Alternatively, the foregoing related embodiments are combined with each other, and the communication frames shown in FIG. 5 and FIG. 6 each may include a multi-link element and a TID-to-link mapping element.

It may be understood that the related embodiment of the collocated AP MLD ID field and the related embodiment of the reduced neighbor report element shown above may be respectively used as separate embodiments. The multi-link elements in the communication frames shown in FIG. 5 and FIG. 6 each may include a collocated AP MLD ID field (a non-collocated AP MLD ID field or a non-collocated AP MLD MAC address field); or the communication frames shown in FIG. 5 and FIG. 6 each may include a reduced neighbor report element. Alternatively, the foregoing related embodiments are combined with each other, and the communication frames shown in FIG. 5 and FIG. 6 each may include a multi-link element and a reduced neighbor report element.

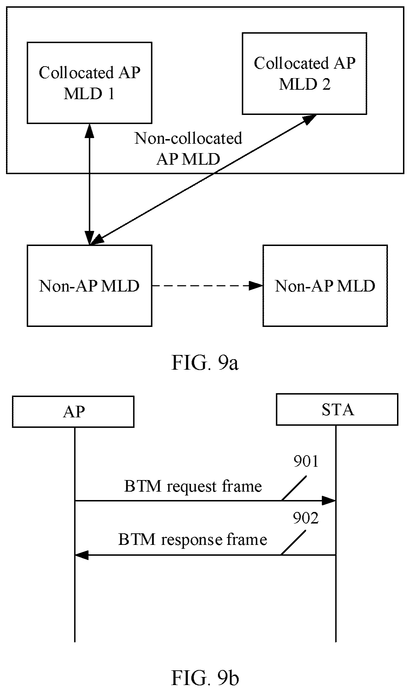

A UHR non-AP MLD can add and establish a new link with a neighbor collocated AP MLD. FIG. 9a is a diagram of an AP switching scenario according to an embodiment of this application. As shown in FIG. 9a, a non-AP MLD establishes a link with a collocated AP MLD 1, and is located in a coverage area of the collocated AP MLD 1. When the non-AP MLD moves to a coverage area of a collocated AP MLD 2, the non-AP MLD may establish a new link with the collocated AP MLD 2. Optionally, when the non-AP MLD is not only located in the coverage area of the collocated AP MLD 1, but also located in the coverage area of the collocated AP MLD 2, both the collocated AP MLD 1 and the collocated AP MLD 2 may perform data transmission with the non-AP MLD. When the non-AP MLD moves out of the coverage area of the collocated AP MLD 1, the non-AP MLD may delete the link between the non-AP MLD and the collocated AP MLD 1.

In the foregoing AP switching scenario, the non-AP MLD needs to query the current collocated AP MLD 1 to obtain related information of a neighbor collocated AP MLD or perform channel scanning by itself, so as to switch to the neighbor collocated AP MLD. Therefore, embodiments of this application further provide a multi-link communication method, to provide the related information of the neighbor collocated AP MLD for the UHR non-AP MLD.

FIG. 9b is a schematic flowchart of still another multi-link communication method according to an embodiment of this application. For descriptions of a non-collocated AP MLD, a collocated AP MLD, a non-AP MLD, and the like in the method, refer to the foregoing descriptions. Details are not described in the method shown in FIG. 9b. It may be understood that, although a relay node is not used in the method described below, persons skilled in the art may learn that when a sending party and a receiving party communicate with each other, a forwarding operation may be performed via the relay node. As shown in FIG. 9b, the method includes the following steps.

901: An AP sends a BTM request frame, and correspondingly, a STA receives the BTM request frame.

It may be understood that, after receiving the BTM request frame, the STA may further send an acknowledgment (acknowledge, ACK) frame to the AP.

For example, the BTM request frame may be generated by the AP, may be generated by a collocated AP MLD with which the AP is affiliated, or may be generated by a non-collocated AP MLD with which the collocated AP MLD with the affiliated AP is affiliated. For descriptions of the BTM request frame, refer to the foregoing descriptions of the communication frame. Details are not described herein again.

It may be understood that the BTM request frame described in this embodiment of this application is merely an example. In another possible implementation, a new UHR action frame is defined to indicate a UHR non-AP MLD to perform a link transition operation. For ease of description, in embodiments of this application, the methods provided in embodiments of this application are described by using a BTM request frame as an example.

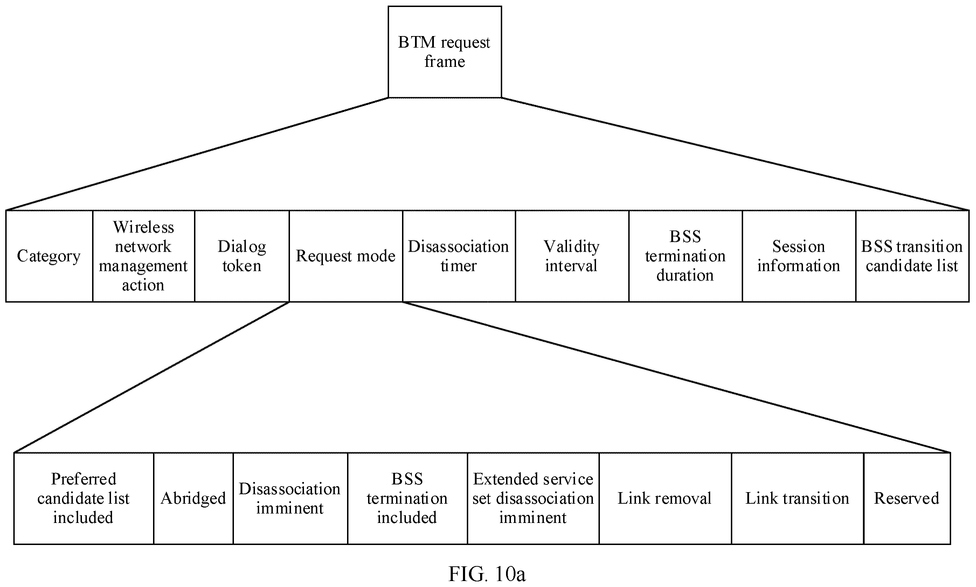

The BTM request frame may include link transition information, and the link transition information may indicate whether to perform switching between collocated AP MLDs. For example, the link transition information may be referred to as collocated AP MLD transition. FIG. 10a is a diagram of a BTM request frame according to this embodiment of this application. The BTM frame may include at least one of the following: a category, a radio network management action, a dialog token, a request mode (request mode), a disassociation timer (disassociation timer), a validity interval (validity interval), BSS termination duration (BSS termination duration), session information (session info URL), or a BSS transition candidate list. The BSS transition candidate list is optional. The request mode may include at least one of the following: preferred candidate list included (preferred candidate list included), abridged (abridged), disassociation imminent (disassociation imminent), BSS termination included (BSS termination included), extended service set (extended service set, ESS) disassociation imminent (ESS disassociation imminent), link removal (link removal), or link transition (link transition). The BSS termination included field indicates whether to disable a BSS. For a UHR non-AP MLD, the BSS termination included field has the following meanings, for example, may indicate whether to terminate a BSS of an affiliated AP (for example, an AP sending a BTM request frame), may indicate whether to terminate all BSSs of a collocated AP MLD, or may indicate whether to terminate all BSSs of a non-collocated AP MLD. The link removal information indicates whether to remove a link. Therefore, in a UHR system, link transition information, BSS termination included information, and link removal information may indicate whether to perform link transition of different non-collocated AP MLDs, or perform link transition of different collocated AP MLDs affiliated with a same non-collocated AP MLD.

In an example, for a UHR non-AP MLD, when a BSS of an affiliated AP is terminated, a collocated AP MLD needs to send a BTM request frame in a broadcast manner on a corresponding link. In this case, the BSS termination included field is set to 1, the link removal field is set to 1, and the link transition field is set to 0.

In another example, when a current collocated AP MLD is terminated, the collocated AP MLD needs to send a BTM request frame in a broadcast manner on all links of the collocated AP MLD. In this case, the BSS termination included field is set to 1, the link removal field is set to 0, and the link transition field is set to 1.

In still another example, when an entire non-collocated AP MLD is terminated, the non-collocated AP MLD needs to send a BTM request frame in a broadcast manner on all links of all affiliated collocated AP MLDs of the non-collocated AP MLD. In this case, the BSS termination included field is set to 1, the link removal field is set to 0, and the link transition field is set to 0.

Optionally, before sending the BTM request frame, the AP may further receive a BTM query frame from the STA. For descriptions of the BTM query frame, refer to a related standard or protocol. This is not limited in embodiments of this application.

902: The STA sends a BTM response frame, and correspondingly, the AP receives the BTM response frame.

It may be understood that, after receiving the BTM response frame, the AP may further send an ACK frame to the STA.

For example, the BTM response frame may be generated by the STA, or may be generated by a non-AP MLD with which the STA is affiliated. For descriptions of the BTM response frame, refer to the foregoing descriptions of the communication frame. Details are not described herein again.

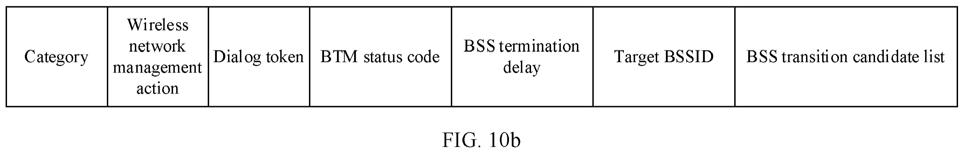

FIG. 10b is a diagram of a BTM response frame according to this embodiment of this application. The BTM response frame may include the following fields: a category, a radio network management action, a dialog token, a BTM status code (status code), a BSS termination delay (BSS termination delay), a target BSSID (target BSSID), and a BSS transition candidate list. The target BSSID and the BSS transition candidate list are optional. For example, when a value of the BTM status code is 0, the BTM response frame includes the target BSSID field. The BTM status code may indicate whether a BSS transition request is accepted. In an example, the BTM status code may be set to a newly defined status value (for example, a first value), to indicate that transition of different collocated AP MLDs affiliated with a same non-collocated AP MLD (collocated AP MLD transition within the same non-collocated AP MLD) is accepted. For example, the target BSSID field may be set to a corresponding target collocated AP MLD MAC address.

In another example, the BTM status code may be further set to another newly defined status value (for example, a second value), to indicate that the UHR non-AP MLD accepts BSS transition of different non-collocated AP MLDs. For example, the target BSSID field may be set to a corresponding target non-collocated AP MLD MAC address, and a neighbor report element indicates a collocated AP MLD, affiliated with a target non-collocated AP MLD, to which a BSS is specifically transferred. Alternatively, when the UHR non-AP MLD performs BSS transition of different non-collocated AP MLDs, the target BSSID field may be set to an MLD MAC address of an affiliated collocated AP MLD of a corresponding target non-collocated AP MLD.

Table 1 shows different values of the BTM status code described in this embodiment of this application. It may be understood that x (for example, x1, x2, and x3), y (for example, y1, y2, and y3), z (for example, z1, z2, and z3), and the like in the tables shown in embodiments of this application may be understood as values. The values such as x, y, and z are not limited in embodiments of this application.

**Table 1**

| Value of the BTM status code | Description |
|---|---|
| 0 | Accepted |
| 1 | Rejected due to unknown reasons |
| 2 | Rejected due to insufficient beacon frames or probe responses received from a candidate neighbor |
| 3 | Rejected due to an insufficient available capacity of the candidate neighbor |
| x1 | Transition of different collocated AP MLDs affiliated with a same non-collocated AP MLD |
| y1 | Transition of different non-collocated AP MLDs |
| ... | ... |

It may be understood that for related descriptions of the BTM query frame, the BTM request frame, and the BTM response frame, refer to a related standard or protocol.

The method shown in FIG. 5 (or FIG. 6) may be combined with the method shown in FIG. 9b. For example, when an AP 1 and a STA 1 exchange information with each other, a communication frame may be used to carry related information, and then before a UHR non-AP MLD with which the STA 1 is affiliated needs to switch to a collocated AP MLD, interaction may be performed based on a BTM request frame and a BTM response frame. Optionally, after the UHR non-AP MLD obtains a neighbor collocated AP MLD, a link may be added and/or a link may be deleted based on the following multi-link reconfiguration request frame and multi-link reconfiguration response frame. Alternatively, after the link is added and/or the link is deleted based on the multi-link reconfiguration request frame and the multi-link reconfiguration response frame, the AP and the STA may exchange related information based on a communication frame. That is, the methods provided in embodiments of this application may be combined with each other, and a combination sequence may be determined based on a specific implementation. Details are not listed one by one in embodiments of this application.

Generally, when a link is added between a non-AP MLD and a non-collocated AP MLD, a reassociation operation is needed. In addition, before reassociation, a pairwise transient key (pairwise transient key, PTK), a group temporal key (group temporal key, GTK), an integrity group temporal key (integrity group temporal key, IGTK), and a beacon integrity group temporal key (beacon integrity group temporal key, BIGTK) all need to be deleted. As a result, all links between the non-AP MLD and the AP MLD are disconnected, and data transmission is interrupted.

In view of this, embodiments of this application provide a multi-link communication method and an apparatus, to ensure data transmission continuity when a link needs to be added and/or a link needs to be deleted. Embodiments of this application provide a multi-link reconfiguration request frame and a multi-link reconfiguration response frame. The two frames can be used to add and/or delete a link while ensuring data transmission.

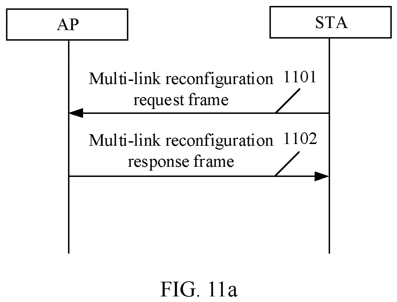

FIG. 11a is a schematic flowchart of yet another multi-link communication method according to an embodiment of this application. For descriptions of a non-collocated AP MLD, a collocated AP MLD, a non-AP MLD, and the like in the method, refer to the foregoing descriptions. Details are not described in the method shown in FIG. 11a. It may be understood that, although a relay node is not used in the method described below, persons skilled in the art may learn that when a sending party and a receiving party communicate with each other, a forwarding operation may be performed via the relay node. As shown in FIG. 11a, the method includes the following steps.

1101: A STA sends a multi-link reconfiguration request frame, and correspondingly, an AP receives the multi-link reconfiguration request frame.

The multi-link reconfiguration request frame includes indication information, and the indication information indicates whether to request to add a link. Alternatively, it may be understood that the indication information indicates whether the multi-link reconfiguration request frame includes link information of an added link or whether the link information of the added link is present in the multi-link reconfiguration request frame. Alternatively, it may be understood that the indication information indicates whether a frame body of a reassociation request frame (except for some fields and elements) is present in the multi-link reconfiguration request frame. For ease of description, the following describes the method provided in this embodiment of this application by using an example in which the indication information indicates whether to request to add a link. The indication information may also be referred to as a request type, a presence indication, or the like. A specific name of the indication information is not limited in embodiments of this application. For example, the indication information may occupy one byte, and a length occupied by the indication information is not limited in embodiments of this application.

In a possible implementation, the indication information may include first indication information, and the first indication information indicates to request to add a link. In this case, the multi-link reconfiguration request frame further includes first link information, and the first link information indicates link information of a station side corresponding to the added link. For example, if the added link is a first link, the first link information may indicate link information of a station side corresponding to the first link. A quantity of added links is not limited in embodiments of this application. When two or more links are added, the multi-link reconfiguration request frame may include link information of a station side corresponding to the two or more links, or the first link information may indicate link information of a station side corresponding to the two or more links. For descriptions of the first link information, refer to the frame body of the reassociation request frame (except for some fields and elements) described below.

In another possible implementation, the indication information may include second indication information, and the second indication information indicates that the first link information is not present in the multi-link reconfiguration request frame. Alternatively, it may be understood that the second indication information indicates no link being added or indicates no frame body of a reassociation request frame (except for some fields and elements) being present in the multi-link reconfiguration request frame.

For example, the multi-link reconfiguration request frame may further include a multi-link reconfiguration element, and the multi-link reconfiguration element may be used to carry link information of a deleted link. Alternatively, it may be understood that the multi-link reconfiguration element is used to carry indication information related to link deletion or parameter information of a corresponding link whose link operation parameter is updated.

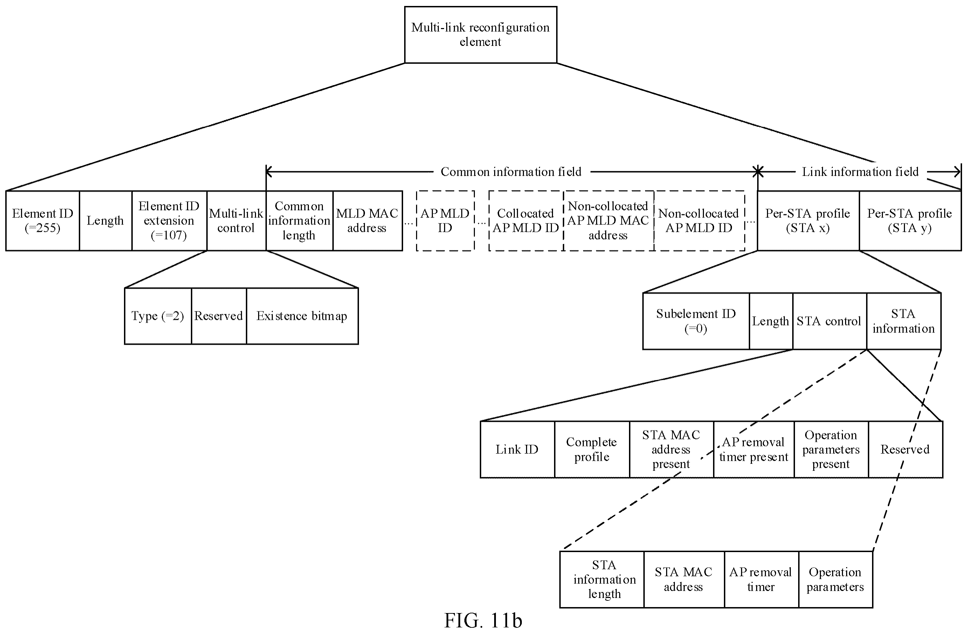

FIG. 11b is a diagram of a multi-link reconfiguration element according to this embodiment of this application. As shown in FIG. 11b, the multi-link reconfiguration element may include at least one of the following fields: an element ID, a length, an element ID extension, multi-link control, a common information length, an MLD MAC address, or a per-STA profile. For example, the multi-link control field includes a type, an existence bitmap, and reserved. For example, the per-STA profile includes a subelement ID, a length, STA control (STA control), and STA information (STA info). The STA control field may include a link ID, a complete profile (complete profile), STA MAC address present (STA MAC address present), removal timer present (removal timer present), operation parameters present (operation parameters present), and reserved. The STA information may include at least one of a STA information length, a STA MAC address, a removal timer, or an operation parameter. It may be understood that specific descriptions of the multi-link reconfiguration element are not listed one by one in embodiments of this application. Optionally, a per-STA profile subelement in the multi-link reconfiguration element may not carry a STA profile field.

With reference to the indication information, the first link information, and the multi-link reconfiguration element that are described above, the multi-link reconfiguration request frame may include the following several examples:
Example 1: The multi-link reconfiguration request frame includes the first indication information and the first link information, but does not include the multi-link reconfiguration element.

Example 2: The multi-link reconfiguration request frame includes the second indication information and the multi-link reconfiguration element, but does not include the first link information.

Example 3: The multi-link reconfiguration request frame includes the first indication information, the first link information, and the multi-link reconfiguration element.

Table 2 shows content of the multi-link reconfiguration request frame described in this embodiment of this application. As shown in Table 2, the multi-link reconfiguration request frame may include at least one of the following: a category (category), a protected EHT action frame (protected EHT action), a dialog token (dialog token), a request type (request type) (namely, indication information), a frame body of a reassociation request frame (except for some fields and elements) (frame body of reassociation request frame except for some fields and elements), or a multi-link reconfiguration element (Reconfiguration Multi-link element).

**Table 2**

| Sequence | Information |
|---|---|
| 1 | Category |
| 2 | Protected UHR/EHT action frame |
| 3 | Dialog token |
| 4 | Request type |
| 5 | Frame body of the reassociation request frame (except for some fields and elements) |
| 6 | Multi-link reconfiguration element |

Table 3 shows some content of the frame body of the reassociation request frame provided in this embodiment of this application. Generally, the frame body of the reassociation request frame is used to carry link information of a STA side corresponding to an added link. Therefore, when the multi-link reconfiguration request frame includes the first indication information, a partial frame body of the reassociation request frame is present in the multi-link reconfiguration request frame. Some fields and elements in the reassociation request frame do not need to be present when a multi-link reconfiguration operation is performed, for example, a listen interval (listen interval), a current AP address (current AP address), a service set identifier (service set identifier, SSID) element, a mobile domain element (mobility domain element, MDE), and an FTE. For example, during multi-link reconfiguration, because a MAC address corresponding to a currently associated AP does not need to be changed, the current AP address field does not need to be carried. The FTE is used for BSS transition, but the multi-link reconfiguration operation does not relate to BSS transition.

**Table 3**

| Number | Information |
|---|---|
| x1 | Capability information (capability information) |
| y1 | Supported rates and basic service set (basic service set, BSS) membership selectors (support rates and BSS membership selectors) |
| z1 | Extended supported rates and BSS membership selectors (Extended support rates and BSS membership selectors) |
| x2 | Power capability (power capability) |
| y2 | Supported channels (supported channels) |
| ... | ... |
| z2 | Basic multi-link element |
| x3 | Operating channel information OCI element (operating channel information) element |
| ... | ... |

1102: The AP sends a multi-link reconfiguration response frame, and correspondingly, the STA receives the multi-link reconfiguration response frame.

When the multi-link reconfiguration request frame includes the first indication information, the multi-link reconfiguration response frame may include second link information, and the second link information indicates link information of an access point side corresponding to the added link.

Table 4 shows content of the multi-link reconfiguration response frame provided in this embodiment of this application. As shown in Table 4, the multi-link reconfiguration response frame may include at least one of the following: a category, a protected EHT action frame, a dialog token, or a frame body of a reassociation response frame (except for some fields and elements). It may be understood that when the multi-link reconfiguration request frame is used only to request to delete a link, the multi-link reconfiguration response frame may not include the frame body of the reassociation response frame (except for some fields and elements).

**Table 4**

| Sequence | Information |
|---|---|
| 1 | Category |
| 2 | Protected UHR/EHT action frame |
| 3 | Dialog token |
| 4 | Frame body of the reassociation response frame (except for some fields and elements) |

Table 5 shows some content of the frame body of the reassociation response frame described in this embodiment of this application. Generally, the frame body of the reassociation response frame is used to carry link information of an AP side corresponding to the added link. Therefore, when the multi-link reconfiguration request frame includes the first indication information, a partial frame body of the reassociation response frame is present in the multi-link reconfiguration response frame. Some fields and elements, such as an MDE, in the reassociation response frame do not need to be present when a multi-link reconfiguration operation is performed.

**Table 5**

| Number | Information |
|---|---|
| x1 | Capability information (capability information) |
| y1 | Status code (status code) |
| z1 | Supported rates and BSS membership selectors (support rates and BSS membership selectors) |
| x2 | Extended supported rates and BSS membership selectors (Extended support rates and BSS membership selectors) |
| y2 | EDCA parameter set |
| ... | ... |
| z2 | Fast transition element (fast transition element, FTE) |
| x3 | Basic multi-link element |
| y3 | Operating channel information OCI element (operating channel information element) |
| ... | ... |

Because a GTK, an IGTK, and a BIGTK need to be negotiated/allocated for each newly added link, in the multi-link reconfiguration response frame, the FTE may be present in the frame body of the reassociation response frame (except for some fields and elements). In an example, the FTE may be used to respectively carry M MLO GTK subelements, MLO IGTK subelements, and MLO BIGTK subelements for M newly added links, where M is an integer greater than or equal to 1. In another example, the FTE may also be used to carry one GTK subelement, one IGTK subelement, and one BIGTK subelement for each newly added link. In this case, the FTE may be carried in a per-STA profile in the basic multi-link element (for example, in this case, information of the GTK, the IGTK, and the BIGTK carried in the FTE is a link indicated by a link ID field in the corresponding per-STA profile or a link indicated by a link ID field in a common information field) or may be allowed to be carried in the frame body. In still another example, a non-collocated MLO GTK subelement, a non-collocated MLO IGTK subelement, and a non-collocated MLO BIGTK subelement may be further newly defined, in other words, identifier information of a collocated AP MLD (for example, an MLD MAC address of the collocated AP MLD) is added to the MLO GTK subelement, the MLO IGTK subelement, and the MLO BIGTK subelement. For example, the FTE may be carried in the frame body and outside the basic multi-link element. Because a PTK does not need to be renegotiated, information in the FTE, such as a message integrity code (message integrity code, MIC), an authenticator nonce (such as ANounce), and a supplicant nonce (such as SNounce), is not needed, that is, PMK-R1 key holder identifier (PMK-R1 key holder identifier, R1KH-ID) and PMK-R0 key holder identifier (PMK-R0 key holder identifier, R0KH-ID) subelements do not need to be carried.

Table 6 shows content of the FTE described in this embodiment of this application.

**Table 6**

| Value (value) | Contents of a data field (contents of data field) |
|---|---|
| 0 | Reserved |
| 2 | GTK |
| 4 | IGTK |
| 5 | OCI |
| 6 | BIGTK |
| 7 | MLO GTK |
| 8 | MLO IGTK |
| 9 | MLO BIGTK |
| 10 to 255 | Reserved |

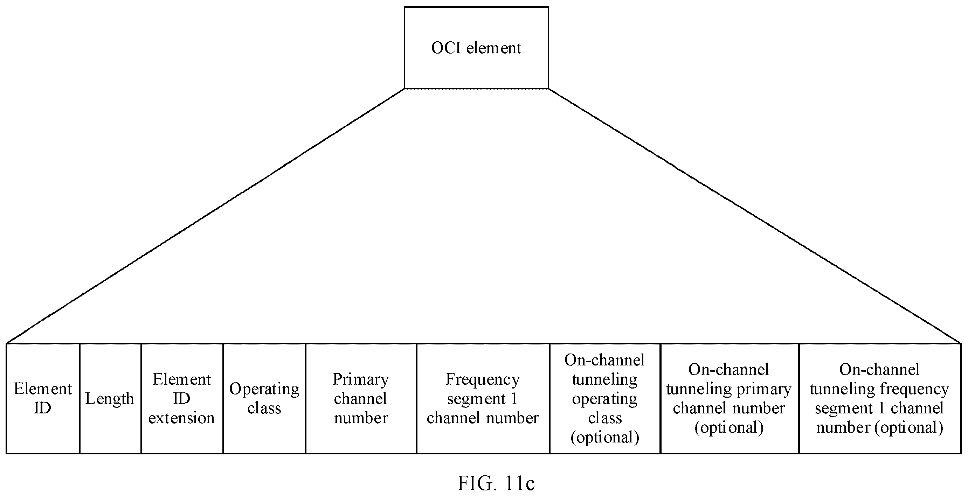

FIG. 11c is a diagram of the OCI element according to this embodiment of this application. The OCI element indicates operating channel information. The OCI element may include: an element ID, a length, an element ID extension, an operating class (operating class), a primary channel number (primary channel number), a frequency segment 1 channel number (frequency segment 1 channel number), an on-channel tunneling operating class (OCT operating class), an on-channel tunneling primary channel number (OCT Primary Channel Number), and an on-channel tunneling frequency segment 1 channel number (OCT Frequency Segment 1 Channel Number). The OCI element carries the on-channel tunneling operating class, the on-channel tunneling primary channel number, and the on-channel tunneling frequency segment 1 channel number, so that the multi-link reconfiguration request frame or the multi-link reconfiguration response frame can be exchanged on another established link, to implement link addition and the like. For descriptions of the OCI element, refer to the following specific scenario.

In this embodiment of this application, frame formats of the reassociation request frame and the reassociation response frame are reused, so that the multi-link reconfiguration request frame and the multi-link reconfiguration response frame effectively implement a link addition function. For example, when a plurality of links are added, a related rule of the basic multi-link element may be reused. Therefore, an implementation is simple.

It may be understood that the foregoing embodiments may be separate embodiments, or may be combined with each other.

The following multi-link reconfiguration scenario is considered. It is assumed that a non-AP MLD has established a link 0 with an AP MLD, and a link 1 and a link 2 need to be added through a multi-link reconfiguration operation. However, current link quality of the link 1 and the link 2 is not good. Therefore, the non-AP MLD may exchange the multi-link reconfiguration request frame and the multi-link reconfiguration response frame on the link 0 to implement an operation of adding the link 1 and the link 2. For example, information, of a STA side, about the link 1 may be carried in a frame body of the multi-link reconfiguration request frame, a link ID in common information in the basic multi-link element is set to a link ID of the link 1, and information of the link 2 is carried in a per-STA profile.

When the frame body of the multi-link reconfiguration request frame carries the OCI element, the operating class, the primary channel number, and the frequency segment 1 channel number may be set to channel information corresponding to the link 1; and the on-channel tunneling operating class, the on-channel tunneling primary channel number, and the on-channel tunneling frequency segment 1 channel number are present and are set to channel information corresponding to the link 0.

When the per-STA profile in the basic multi-link element in the multi-link reconfiguration request frame carries the OCI element, the operating class, the primary channel number, and the frequency segment 1 channel number may be set to channel information corresponding to the link 2; and the on-channel tunneling operating class, the on-channel tunneling primary channel number, and the on-channel tunneling frequency segment 1 channel number are present and are set to channel information corresponding to the link 0.

In this embodiment of this application, although the multi-link reconfiguration request frame and the multi-link reconfiguration response frame are sent on the link 0, information, of a STA side and an AP side, corresponding to the link 0 does not need to be carried, and only information of a to-be-added link needs to be carried.

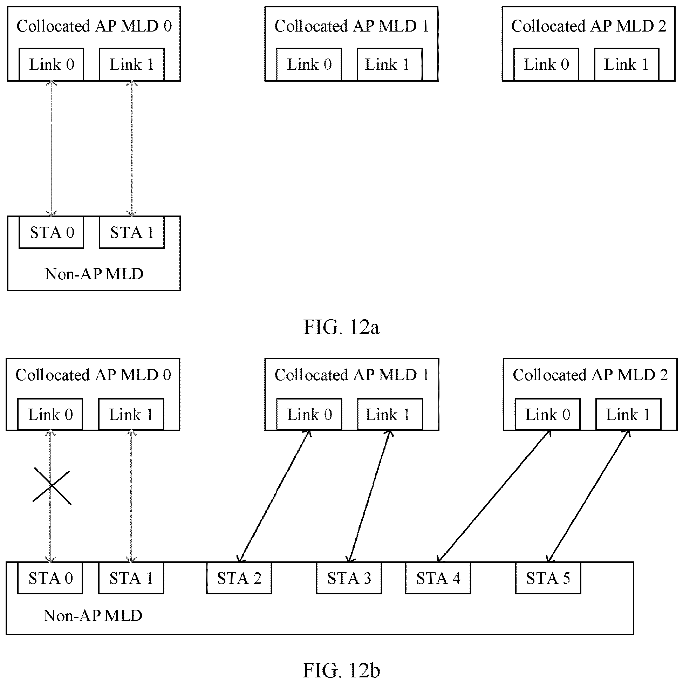

The following scenarios are considered. As shown in FIG. 12a, a UHR non-AP MLD currently establishes a link 0 and a link 1 with a collocated AP MLD 0. As shown in FIG. 12b, a UHR non-AP MLD needs to respectively establish links with a collocated AP MLD 1 and a collocated AP MLD 2, and delete a link 0 with a collocated AP MLD 0. The collocated AP MLD 0, the collocated AP MLD 1, and the collocated AP MLD 2 may be affiliated with a same non-collocated AP MLD.

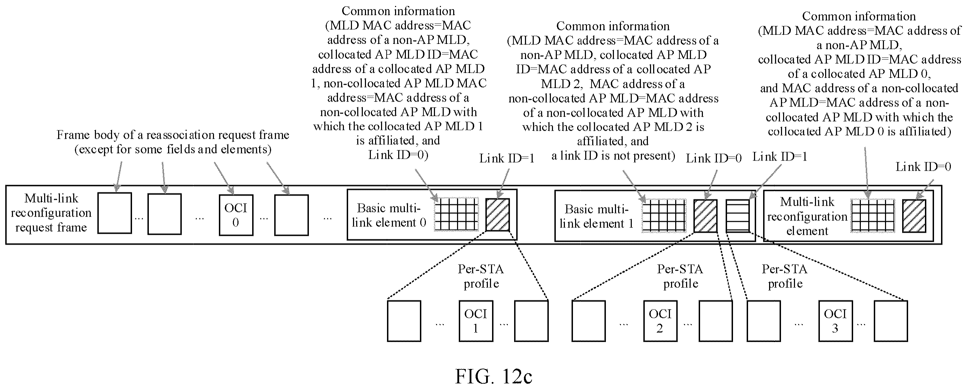

Therefore, the UHR non-AP MLD may send a multi-link reconfiguration request frame on the link 1 to the collocated AP MLD 0. FIG. 12c is a diagram of the multi-link reconfiguration request frame according to this embodiment of this application. Because the UHR non-AP MLD needs to establish links to two collocated AP MLDs at the same time, the multi-link reconfiguration request frame includes two basic multi-link elements, for example, a basic multi-link element 0 and a basic multi-link element 1.

In a common information field in the basic multi-link element 0, an MLD MAC address field is a MAC address of the UHR non-AP MLD, a collocated AP MLD ID field is an MLD MAC address of the collocated AP MLD 1, a non-collocated AP MLD MAC address field is an MLD MAC address of a non-collocated AP MLD with which the collocated AP MLD 1 is affiliated, and a link ID is an ID of a link 0 of the collocated AP MLD 1. A link ID in a per-STA profile in the basic multi-link element 0 is set to an ID of a link 1 of the collocated AP MLD 1.

In a common information field in the basic multi-link element 1, an MLD MAC address field is an MLD MAC address of the UHR non-AP MLD, a collocated AP MLD ID field is an MLD MAC address of the collocated AP MLD 2, and a non-collocated AP MLD MAC address field is an MLD MAC address of a non-collocated AP MLD with which the collocated AP MLD 2 is affiliated. It may be understood that the link ID in the common information field in the basic multi-link element 0 is set to 0, but no link ID field can be present in the common information field in the basic multi-link element 1 because information carried in a frame body is information of the link 0 of the collocated AP MLD 1. Link IDs in two per-STA profiles in the basic multi-link element 1 are respectively set to a link ID 0 and a link ID 1 of the collocated AP MLD 1.

An OCI element in the multi-link reconfiguration request frame may include OCI 0 to OCI 3. For example, the OCI 0 may carry the following information: information of the link 0 of the collocated AP MLD 1 (Info on link 0 of Collocated AP MLD 1) and information of the link 1 of the collocated AP MLD 0 (Info on link 1 of Collocated AP MLD 0). The OCI 1 carries the following information: information of the link 1 of the collocated AP MLD 1 (Info on link 1 of Collocated AP MLD 1) and the information of the link 1 of the collocated AP MLD 0 (Info on link 1 of Collocated AP MLD 0). The OCI 2 carries the following information: information of a link 0 of the collocated AP MLD 2 (Info on link 0 of Collocated AP MLD 2) and the information of the link 1 of the collocated AP MLD 0 (Info on link 1 of Collocated AP MLD 0). The OCI 3 carries the following information: information of a link 1 of the collocated AP MLD 2 (Info on link 1 of Collocated AP MLD 2) and the information of the link 1 of the collocated AP MLD 0 (Info on link 1 of Collocated AP MLD 0).

It may be understood that the foregoing two scenarios are merely examples. During specific implementation, there may be more scenarios with reference to one or more of the foregoing multi-link element, TID-to-link mapping element, reduced neighbor report element, multi-link reconfiguration request frame, and multi-link reconfiguration response frame. Details are not listed in embodiments of this application.

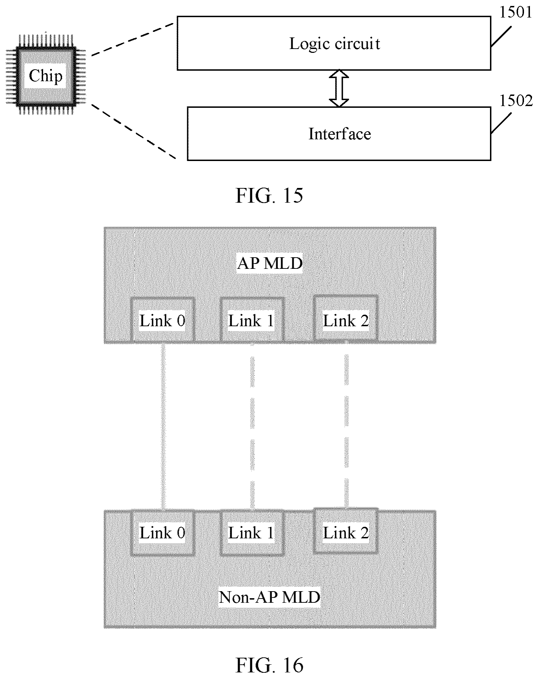

This embodiment of this application further provides a multi-link reconfiguration request frame and a multi-link reconfiguration response frame. The multi-link communication method in embodiments of this application may be applied to a communication system including a non-AP MLD and an AP MLD, or may be applied to a communication system including a non-collocated AP MLD, a collocated AP MLD, and a non-AP MLD. The communication system is not limited. For ease of description, the following uses the scenario shown in FIG. 16 as an example for description when specific examples are used, but this does not constitute a limitation. As shown in FIG. 16, a link 0 (Link 0) is initially established between a non-AP MLD and an AP MLD. However, at a moment, the non-AP MLD needs to add a link 1 (Link 1) and a link 2 (Link 2) through a multi-link reconfiguration operation (or referred to as a reconfiguration multi-link operation). For example, the non-AP MLD and the associated AP MLD may exchange a multi-link reconfiguration request frame (or referred to as a reconfiguration multi-link request frame) and a multi-link reconfiguration response frame (or referred to as a reconfiguration multi-link response frame) on the link 0, to implement addition of the link 1 and the link 2. That is, a quantity of added links M is equal to 2.

### Example A

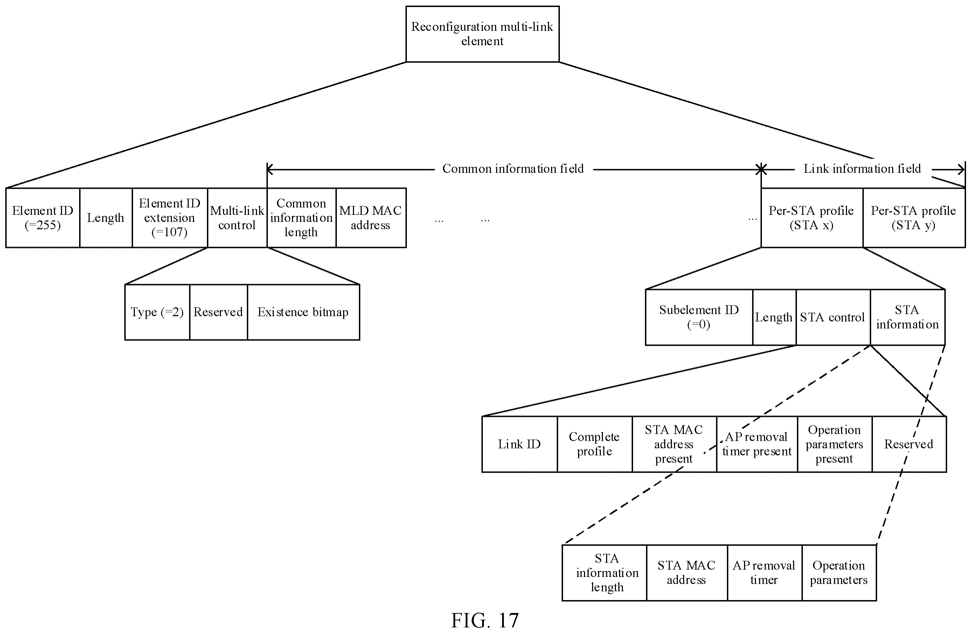

Table 7 shows content of the multi-link reconfiguration request frame. For related descriptions of the multi-link reconfiguration request frame, refer to Table 2. For content of a frame body of the reassociation request frame, refer to Table 3. Details are not described herein again. For example, a reconfiguration multi-link element (or referred to as a multi-link reconfiguration element) in the multi-link reconfiguration request frame may carry link information of a deleted link or parameter information of a link whose link operation parameter is updated. FIG. 17 is a diagram of a format of the reconfiguration multi-link element according to this embodiment of this application. For related descriptions of FIG. 17, refer to FIG. 11b. Details are not described herein again. For the format of the reconfiguration multi-link element, refer to FIG. 11b. Details are not described herein again.

**Table 7**

| Sequence | Information |
|---|---|
| 1 | Category |
| 2 | Protected EHT action frame |
| 3 | Dialog token |
| 4 | Request type |
| 5 | Frame body of the reassociation request frame (except for some fields and elements) |
| 6 | Reconfiguration multi-link element |

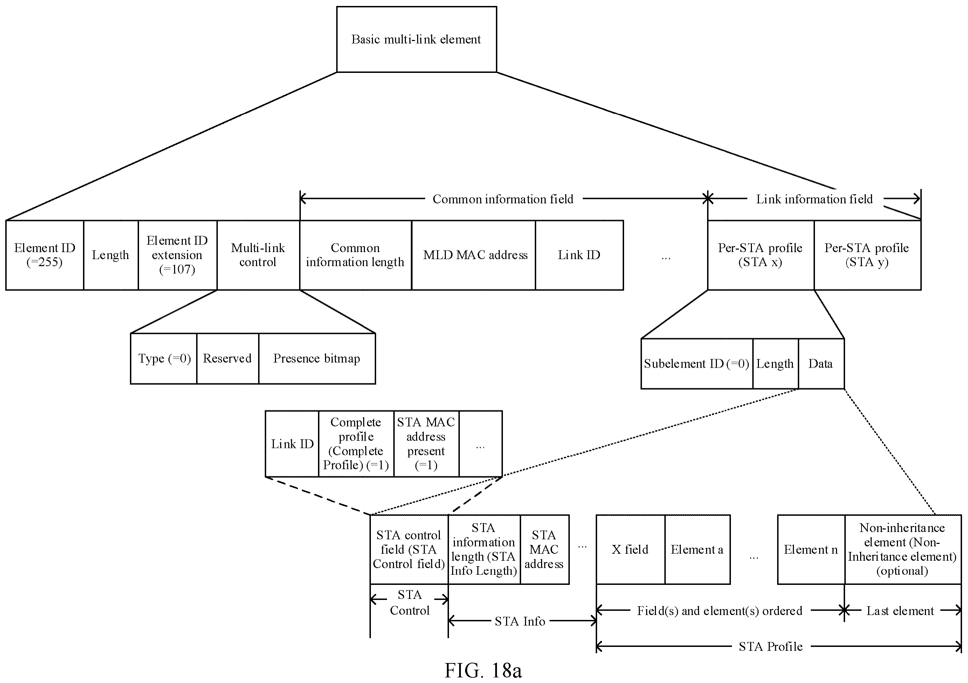

FIG. 18a is a diagram of a format of a basic multi-link element according to this embodiment of this application. A link ID field in a common information field in the basic multi-link element may be set to a link ID of one of added links. For example, the link ID field in the common information field may be set to a link ID of the link 1. The basic multi-link element may carry a per-STA profile subelement, to indicate link information of the link 2.

For example, when one link is added, the link ID field in the common information field may be set to a link ID of the link. A quantity of per-STA profile subelements may increase as the quantity of added links. For example, the quantity of per-STA profile subelements may be M-1.

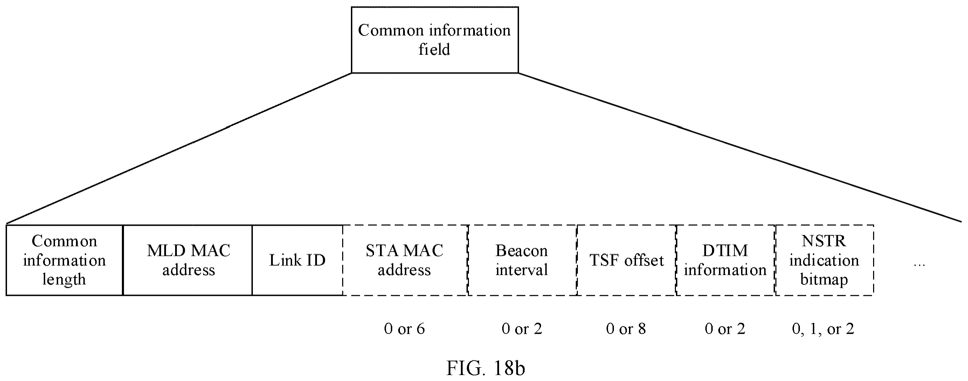

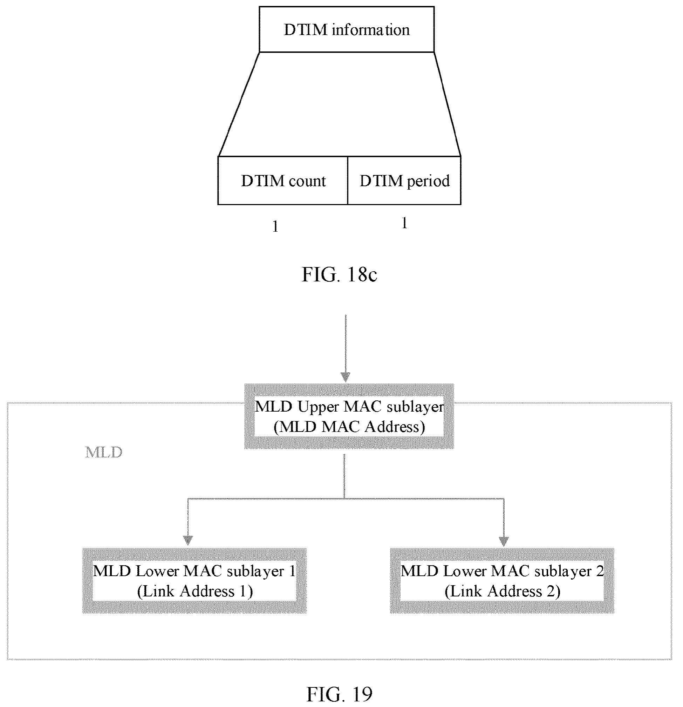

As shown in FIG. 18b, the common information field in the basic multi-link element may further include at least one of the following: a STA MAC address, a beacon interval (beacon interval), a timing synchronization function (timing synchronization function, TSF) offset (TSF offset), delivery traffic indication message (delivery traffic indication message, DTIM) information (DTIM info), or a non-simultaneous transmit and receive (non-simultaneous transmit and receive, NSTR) indication bitmap (NSTR indication bitmap). For example, the common information field may further include at least one present (present) bit (not shown in FIG. 18b). For example, present bits may respectively indicate whether the STA MAC address field is present and whether the NSTR indication bitmap field is present. For another example, one present bit may indicate whether all the beacon interval field, the TSF offset field, and the DTIM information field are present. A sequence of all fields and a byte length shown in FIG. 18b and FIG. 18c are merely examples, and should not be construed as a limitation on embodiments of this application.

Generally, the per-STA profile subelement also includes a STA MAC address, a beacon interval, a TSF offset, DTIM information, and an NSTS indication bitmap (not shown in FIG. 18a one by one). For example, content carried in the foregoing five fields in the per-STA profile subelement may be related information of the link 2. Content carried in the foregoing five fields in the common information field may be related information of the link 1. The following describes the foregoing five fields in the common information field in detail.

The STA MAC address field may be used to carry a STA MAC address, at a non-AP MLD side, of a newly added link, or a BSSID, at an AP MLD side, of the newly added link. Generally, an MLD is a device that has a plurality of radio frequency modules respectively operating on different frequency bands/channels. When a spacing between channels on which two radio frequency modules in a device operate is large enough, the two radio frequency modules may not interfere with each other, and may operate independently. As shown in FIG. 19, each AP MLD has an MLD MAC address in addition to a MAC address of each link. Similarly, each non-AP MLD has an MLD MAC address in addition to a MAC address of each link. Therefore, for a multi-link reconfiguration request frame sent by a STA, a STA MAC address field may be used to carry a STA MAC address, at a non-AP MLD side, of a newly added link, or a BSSID, at an AP MLD side, of the newly added link. For related descriptions of FIG. 19, refer to FIG. 2, FIG. 4, or the like. Details are not described herein again.

The NSTR indication bitmap field indicates whether an added link (for example, the link 1) and another link (for example, a link except for the link 1 in links established between MLDs) are NSTR links. If transmission on a link concurrent with reception on another link is supported between any two links, it may be considered that an STR capability is supported between the two links; otherwise, it is considered that an NSTR capability is supported between the two links. For example, an NSTR bitmap size (NSTR bitmap size) field may be further added to an existence bitmap field (or referred to as a presence bitmap, as shown in FIG. 18a) in the basic multi-link element. The NSTR bitmap size field indicates a length of the NSTR indication bitmap.

The beacon interval field may indicate a beacon interval of a corresponding link (for example, the link 1).

The TSF offset field indicates a difference between a TSF timer (TSF timer) of an AP corresponding to an added link (for example, the link 1) and a TSF timer of a transmit link on which the AP is located.

A format of the DTIM information field may be shown in FIG. 18c. A DTIM count (DTIM count) field may indicate a quantity of left beacon frames to a next DTIM, and a DTIM period (DTIM Period) indicates a quantity of beacon intervals between two consecutive DTIMs.

Table 8 shows content of the multi-link reconfiguration response frame.

**Table 8**

| Sequence | Information |
|---|---|
| 1 | Category |
| 2 | Protected EHT action frame |
| 3 | Dialog token |
| 4 | Count (count) |
| 5 | Reconfiguration status list (reconfiguration status list) |
| 6 | Frame body of the reassociation response frame (except for some fields and elements) |

The count field may indicate a quantity (for example, N) of link IDs+status codes (status codes) in the reconfiguration status list. The quantity of link IDs+status codes may correspond to the quantity of per-STA profile subelements carried in the reconfiguration multi-link element. The link ID may be an ID of the deleted link carried in the reconfiguration multi-link element, or an ID of the link whose link operation parameter is updated.

The reconfiguration status list carries N "link IDs+status codes" indicated by the count field.

For other content of the multi-link reconfiguration response frame, refer to descriptions in Table 4. For content of the frame body of the reassociation response frame, refer to descriptions in Table 5. Details are not described herein again. For related descriptions of the FTE, refer to Table 6. For related descriptions of the basic multi-link element in the multi-link reconfiguration response frame, refer to FIG. 18a to FIG. 18c. The basic multi-link element in the multi-link reconfiguration request frame and the basic multi-link element in the multi-link reconfiguration response frame have a same format. A difference between the basic multi-link element in the multi-link reconfiguration response frame and the basic multi-link element in the multi-link reconfiguration request frame lies in that the basic multi-link element in the multi-link reconfiguration request frame carries the link information of the STA side of the added link, and the basic multi-link element in the multi-link reconfiguration response frame carries the link information of the AP side of the added link.

For example, if the added link is a non-primary link (Non-primary link) of an NSTR mobile AP MLD, the multi-link reconfiguration response frame does not need to carry BIGTK information of the link (or does not need to carry GTK and IGTK information), and does not need to carry a beacon interval, a TSF offset, and DTIM information. This is because an AP corresponding to the non-primary link does not send a beacon frame.

Generally, the multi-link element includes a multi-link control field, the common information field, and a link information field. The common information field carries common information of a plurality of stations in a multi-link device and information of the multi-link device. The link information field carries information of a station on each link in the multi-link device, for example, a per-STA profile shown in FIG. 17. The multi-link control field carries a type of the multi-link element (for example, a plurality of variants such as a basic variant (Basic variant), a reconfiguration variant (Reconfiguration variant), and a probe request variant (Probe Request variant) are defined at present), an existence bitmap (presence bitmap) field, and indication information indicating which field is not present.

An inheritance mode means that a corresponding element of a corresponding link in a per-STA profile is carried in the per-STA profile only when content of the corresponding element of the corresponding link in the per-STA profile is different from content of a corresponding element of a corresponding link in the frame body. When the content of the corresponding element of the corresponding link in the per-STA profile is the same as content of a corresponding element of a corresponding link in the frame body, the corresponding element of the corresponding link in the per-STA profile does not need to be carried in the per-STA profile repeatedly. In this embodiment of this application, the following fields are added to the common information field: the STA MAC address, the beacon interval, the timing synchronization function offset (TSF offset), the DTIM information (DTIM info), and the NSTR indication bitmap (NSTR indication bitmap). Therefore, a basic multi-link element inheritance rule may be effectively used. For example, when content of an element corresponding to the link 1 is the same as content of an element corresponding to the link 2, the content of the element corresponding to the link 2 may not need to be repeatedly carried in a per-STA profile. For another example, when content of an element corresponding to the link 1 is different from content of an element corresponding to the link 2, the content of the element corresponding to the link 2 may be carried in a per-STA profile.

In this embodiment of this application, the basic multi-link element indicates related information of a plurality of added links, and a currently defined related basic multi-link element inheritance rule may be reused. For example, the basic multi-link element may alternatively not carry information of a transmit link, thereby reducing signaling overheads. The transmit link is a transmit link of the multi-link reconfiguration request frame.

### Example B

For content of the multi-link reconfiguration request frame, refer to Table 2 or Table 7. For content of the frame body of the reassociation request frame, refer to Table 3. Details are not described herein again. For example, a reconfiguration multi-link element (or referred to as a multi-link reconfiguration element) in the multi-link reconfiguration request frame may carry link information of a deleted link or parameter information of a link whose link operation parameter is updated. For related descriptions of the reconfiguration multi-link element, refer to FIG. 17, FIG. 11b, or the like. Details are not described herein again.

For example, because NSTR information is updated due to link addition, the reconfiguration multi-link element may further carry a STA MAC address, of a non-AP MLD side, corresponding to an added link. For NSTR information updating due to link addition, if this link is successfully added, a status code field corresponding to NSTR information updating of the corresponding added link in the multi-link reconfiguration response frame should be set to success (SUCCESS).

In an example, as shown in Table 3 above, the frame body of the reassociation request frame may not carry the current AP address field.

In another example, the current AP address field in the frame body of the reassociation request frame may also be set to a STA MAC address corresponding to the added link.

For related descriptions of the multi-link reconfiguration response frame, refer to the descriptions of the example A (Table 8). Details are not described herein again.

For other link information of the added link carried in the multi-link reconfiguration request frame in the foregoing example B and an example C, refer to the capability information, the supported rates and BSS membership selectors, the extended supported rates and BSS membership selectors, the power capability, the supported channels, and the OCI element shown in Table 3. For other link information of the added link carried in the multi-link reconfiguration response frame, refer to the capability information, the status code, the supported rates and BSS membership selectors, the extended supported rates and BSS membership selectors, the EDCA parameter set, the FTE, and the OCI element shown in Table 5. Details are not described herein again.

### Example C

Added link information may carry link information of a plurality of newly added links by using a per-STA profile subelement in a link information field in the basic multi-link element. For example, one per-STA profile subelement corresponds to link information of one added link. The frame body of the reassociation request frame (except for some fields and elements) is carried in a STA profile field of the per-STA profile subelement.

For example, link information of the link 1 and link information of the link 2 may be separately carried in a per-STA profile subelement. For example, in this case, the link ID field in the common information field in the basic multi-link element may not be present. For the example C, because a current basic multi-link element inheritance rule cannot be used (the current basic multi-link element inheritance rule is based on information in the frame body of the reassociation request frame/reassociation response frame), an inheritance rule based on information in a STA profile in a first per-STA profile subelement may be defined. For example, the frame body of the reassociation request frame may be carried in the STA profile field of the per-STA profile subelement.

The basic multi-link element in the multi-link reconfiguration request frame and the basic multi-link element in the multi-link reconfiguration response frame have a same format. A difference between the two basic multi-link elements lies in that the basic multi-link element in the multi-link reconfiguration request frame carries the link information of the STA side of the added link, and the basic multi-link element in the multi-link reconfiguration response frame carries the link information of the AP side of the added link.

Table 9 shows content of the multi-link reconfiguration request frame.

**Table 9**

| Sequence | Information |
|---|---|
| 1 | Category |
| 2 | Protected EHT action frame |
| 3 | Dialog token |
| 5 | Basic multi-link element |
| 6 | Reconfiguration multi-link element |

For descriptions of related content in Table 9, refer to Table 2, Table 3, Table 7, and the like. Details are not described herein again.

Table 10 shows content of the multi-link reconfiguration response frame. For example, the frame body of the reassociation response frame may be carried in the STA profile field of the per-STA profile subelement. For related descriptions of the multi-link reconfiguration response frame, refer to Table 8, Table 9, or the like. Details are not described herein again.

**Table 10**

| Sequence | Information |
|---|---|
| 1 | Category |
| 2 | Protected EHT action frame |
| 3 | Dialog token |
| 4 | Count (count) |
| 5 | Reconfiguration status list (reconfiguration status list) |
| 6 | Basic multi-link element |

In this embodiment of this application, the multi-link reconfiguration request frame/the multi-link reconfiguration response frame is reset, so that formats of the two frames can be simplified, and a link addition function can be further implemented.

For related descriptions of the basic multi-link elements in the frames shown in Table 7 to Table 9, further refer to the foregoing descriptions in FIG. 5 to FIG. 7, and the like. Details are not described herein again.

In embodiments of this application, a "field", a "subfield", and the like are not specifically distinguished. Although the "field", the "subfield", an "element", and a "subelement" are not specifically distinguished in embodiments of this application, persons skilled in the art may adaptively distinguish relationships between the fields described embodiments of this application.

The following describes communication apparatuses provided in embodiments of this application.

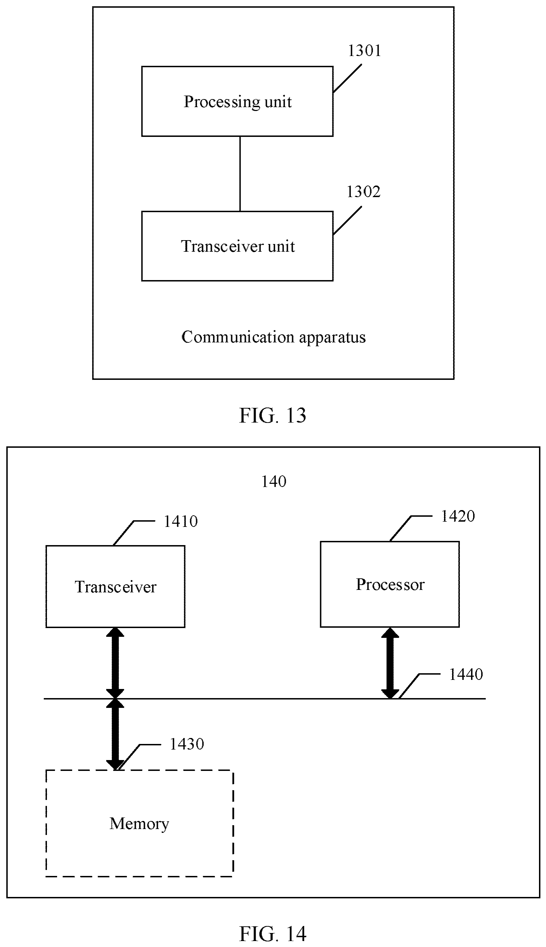

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely logical function division. During actual implementation, another division manner may be used. The following describes in detail communication apparatuses in embodiments of this application with reference to FIG. 13 to FIG. 15.

FIG. 13 is a diagram of a structure of a communication apparatus according to an embodiment of this application. As shown in FIG. 13, the communication apparatus includes a processing unit 1301 and a transceiver unit 1302. The transceiver unit 1302 may implement a corresponding communication function, and the processing unit 1301 is configured to perform data processing. The transceiver unit 1302 may also be referred to as a communication interface, a communication unit, or the like.

In some embodiments of this application, the communication apparatus may be configured to perform an action performed by the AP in the foregoing method embodiments. In this case, the communication apparatus may be the AP or a component (for example, a chip or a system) that can be disposed in the AP. The transceiver unit 1302 is configured to perform a receiving/sending-related operation of the AP in the foregoing method embodiments. The processing unit 1301 is configured to perform a processing-related operation of the AP in the foregoing method embodiments.

For example, the processing unit 1301 is configured to determine a communication frame, and the transceiver unit 1302 is configured to output the communication frame.

It may be understood that the transceiver unit 1302 may send the communication frame to a STA, or the transceiver unit 1302 outputs the communication frame from the processing unit 1301 to another component in the AP. Related descriptions of outputting other frames by the transceiver unit are similar, and details are not described below again.

For example, the processing unit 1301 is configured to determine a BTM request frame, and the transceiver unit 1302 is configured to output the BTM request frame. It may be understood that the transceiver unit 1302 may send the BTM request frame to the STA, or the transceiver unit 1302 outputs the BTM request frame from the processing unit 1301 to another component in the AP.

For example, the transceiver unit 1302 is configured to input a BTM response frame, and the processing unit 1301 is configured to parse the BTM response frame.

For example, the transceiver unit 1302 is configured to input a multi-link reconfiguration request frame, and the processing unit 1301 is configured to parse the multi-link reconfiguration request frame.

For example, the processing unit 1301 is configured to determine a multi-link reconfiguration response frame, and the transceiver unit 1302 is configured to output the multi-link reconfiguration response frame.

In some other embodiments of this application, the communication apparatus may be configured to perform an action performed by the STA in the foregoing method embodiments. In this case, the communication apparatus may be the STA or a component that can be disposed in the STA. The transceiver unit 1302 is configured to perform a receiving/sending-related operation of the STA in the foregoing method embodiments. The processing unit 1301 is configured to perform a processing-related operation of the STA in the foregoing method embodiments.

The transceiver unit 1302 is configured to input a communication frame, and the processing unit 1301 is configured to parse the communication frame.

It may be understood that, for specific descriptions of parsing the communication frame by the processing unit 1301, refer to the foregoing method embodiment. Details are not described herein.

For example, the transceiver unit 1302 is configured to input a BTM request frame, and the processing unit 1301 is configured to parse the BTM request frame.

For example, the processing unit 1301 is configured to determine a BTM response frame, and the transceiver unit 1302 is configured to output the BTM response frame.

For example, the processing unit 1301 is configured to determine a multi-link reconfiguration request frame, and the transceiver unit 1302 is configured to output the multi-link reconfiguration request frame.

For example, the transceiver unit 1302 is configured to input a multi-link reconfiguration response frame, and the processing unit 1301 is configured to parse the multi-link reconfiguration response frame.

In some embodiments of this application, the communication apparatus may be configured to perform an action performed by the STA in the foregoing method embodiments. In this case, the communication apparatus may be the STA or a component (for example, a chip or a system) that can be disposed in the STA. The transceiver unit 1302 is configured to perform a receiving/sending-related operation of the STA in the foregoing method embodiments. The processing unit 1301 is configured to perform a processing-related operation of the STA in the foregoing method embodiments.

For example, the processing unit 1301 is configured to determine a communication frame, and the transceiver unit 1302 is configured to output the communication frame.

It may be understood that the transceiver unit 1302 may send the communication frame to an AP, or the transceiver unit 1302 outputs the communication frame from the processing unit 1301 to another component in the STA.

For example, the transceiver unit 1302 is configured to input a BTM request frame, and the processing unit 1301 is configured to parse the BTM request frame.

For example, the processing unit 1301 is configured to determine a BTM response frame, and the transceiver unit 1302 is configured to output the BTM response frame.

For example, the processing unit 1301 is configured to determine a multi-link reconfiguration request frame, and the transceiver unit 1302 is configured to output the multi-link reconfiguration request frame.

For example, the transceiver unit 1302 is configured to input a multi-link reconfiguration response frame, and the processing unit 1301 is configured to parse the multi-link reconfiguration response frame.

In some other embodiments of this application, the communication apparatus may be configured to perform an action performed by the AP in the foregoing method embodiments. In this case, the communication apparatus may be the AP or a component that can be disposed in the AP. The transceiver unit 1302 is configured to perform a receiving/sending-related operation of the AP in the foregoing method embodiments. The processing unit 1301 is configured to perform a processing-related operation of the AP in the foregoing method embodiments.

The transceiver unit 1302 is configured to input a communication frame, and the processing unit 1301 is configured to parse the communication frame.

It may be understood that, for specific descriptions of parsing the communication frame by the processing unit 1301, refer to the foregoing method embodiment. Details are not described herein.

For example, the processing unit 1301 is configured to determine a BTM request frame, and the transceiver unit 1302 is configured to output the BTM request frame. It may be understood that the transceiver unit 1302 may send the BTM request frame to a STA, or the transceiver unit 1302 outputs the BTM request frame from the processing unit 1301 to another component in the AP.

For example, the transceiver unit 1302 is configured to input a BTM response frame, and the processing unit 1301 is configured to parse the BTM response frame.

For example, the transceiver unit 1302 is configured to input a multi-link reconfiguration request frame, and the processing unit 1301 is configured to parse the multi-link reconfiguration request frame.

For example, the processing unit 1301 is configured to determine a multi-link reconfiguration response frame, and the transceiver unit 1302 is configured to output the multi-link reconfiguration response frame.

In still other embodiments of this application, the communication apparatus may be a non-collocated AP MLD or a component that may be disposed in the non-collocated AP MLD. For example, the processing unit 1301 may be configured to generate a communication frame, and the transceiver unit 1302 may be configured to output the communication frame (for example, output the communication frame to an AP).

Optionally, the communication apparatus may further include a storage unit. The storage unit may be configured to store instructions and/or data. The processing unit 1301 may read the instructions and/or data in the storage unit, to enable the communication apparatus to implement the foregoing method embodiments.

It may be understood that specific descriptions of the transceiver unit and the processing unit that are described in embodiments of this application are merely examples. For specific functions, performed steps, or the like of the transceiver unit and the processing unit, refer to the foregoing method embodiments. Details are not described herein.

In the foregoing embodiments, for descriptions of the communication frame, the BTM request frame, the BTM response frame, the multi-link reconfiguration request frame, the multi-link reconfiguration response frame, and the like, refer to the descriptions in the foregoing method embodiments. Details are not described herein again.

The foregoing describes the communication apparatus in embodiments of this application. The following describes a possible product form of the communication apparatus. It should be understood that any product in any form having the function of the communication apparatus described in FIG. 13 falls within the protection scope of embodiments of this application. It should be further understood that the following description is merely an example, and a product form of the communication apparatus in embodiments of this application is not limited thereto.

In a possible implementation, in the communication apparatus shown in FIG. 13, the processing unit 1301 may be one or more processors. The transceiver unit 1302 may be a transceiver, or the transceiver unit 1302 may be a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A manner of connection between the processor and the transceiver is not limited in embodiments of this application. In a process of performing the foregoing method, an information sending process in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, an information receiving process in the foregoing method may be understood as a process of receiving the foregoing input information by the processor. When the processor receives the input information, the transceiver receives the information, and inputs the information into the processor. Further, after the transceiver receives the information, other processing may need to be performed on the information before the information is received by the processor.

As shown in FIG. 14, a communication apparatus 140 includes one or more processors 1420 and a transceiver 1410.

In some embodiments of this application, the communication apparatus may be configured to perform a step, a function, or the like performed by the AP in the foregoing method embodiments.

The processor 1420 is configured to determine a communication frame, and the transceiver 1410 is configured to send a communication frame (or the transceiver 1410 is configured to receive a communication frame, and the processor 1420 is configured to parse the communication frame).

For example, the processor 1420 is configured to determine a BTM request frame, and the transceiver 1410 is configured to send the BTM request frame. It may be understood that the transceiver 1410 may send the BTM request frame to a STA, or the transceiver 1410 sends the BTM request frame from the processor 1420 to another component in the AP.

For example, the transceiver 1410 is configured to receive a BTM response frame, and the processor 1420 is configured to parse the BTM response frame.

For example, the transceiver 1410 is configured to receive a multi-link reconfiguration request frame, and the processor 1420 is configured to parse the multi-link reconfiguration request frame.

For example, the processor 1420 is configured to determine a multi-link reconfiguration response frame, and the transceiver 1410 is configured to send the multi-link reconfiguration response frame.

In some other embodiments of this application, the communication apparatus may be configured to perform a step, a function, or the like performed by the STA in the foregoing method embodiments.

The transceiver 1410 is configured to receive a communication frame, and the processor 1420 is configured to parse the communication frame (or the processor 1420 is configured to determine a communication frame, and the transceiver 1410 is configured to send the communication frame).

For example, the transceiver 1410 is configured to receive a BTM request frame, and the processor 1420 is configured to parse the BTM request frame.

For example, the processor 1420 is configured to determine a BTM response frame, and the transceiver 1410 is configured to send the BTM response frame.

For example, the processor 1420 is configured to determine a multi-link reconfiguration request frame, and the transceiver 1410 is configured to send the multi-link reconfiguration request frame.

For example, the transceiver 1410 is configured to receive a multi-link reconfiguration response frame, and the processor 1420 is configured to parse the multi-link reconfiguration response frame.

It may be understood that specific descriptions of the transceiver and the processor that are described in embodiments of this application are merely examples. For specific functions, performed steps, or the like of the transceiver and the processor, refer to the foregoing method embodiments. Details are not described herein.

In still other embodiments of this application, the communication apparatus may be a non-collocated AP MLD or a component that may be disposed in the non-collocated AP MLD. For example, the processor 1420 may be configured to generate a communication frame, and the transceiver 1410 may be configured to send the communication frame (for example, send the communication frame to an AP).

In the foregoing embodiments, for descriptions of the communication frame, the BTM request frame, the BTM response frame, the multi-link reconfiguration request frame, the multi-link reconfiguration response frame, and the like, refer to the descriptions in the foregoing method embodiments. Details are not described herein again.

In each implementation of the communication apparatus shown in FIG. 14, the transceiver may include a receiver machine and a transmitter machine. The receiver machine is configured to perform a receiving function (or operation), and the transmitter machine is configured to perform a transmitting function (or operation). The transceiver is configured to communicate with another device/apparatus through a transmission medium.

Optionally, the communication apparatus 140 may further include one or more memories 1430, configured to store program instructions and/or data. The memory 1430 is coupled to the processor 1420. Coupling in embodiments of this application is indirect coupling or a communication connection between apparatuses, units, or modules, may be in an electrical form, a mechanical form, or another form, and is used for information exchange between the apparatuses, the units, and the modules. The processor 1420 may operate with the memory 1430 together. The processor 1420 may execute the program instructions stored in the memory 1430. Optionally, at least one of the one or more memories may be included in the processor.

A specific connection medium between the transceiver 1410, the processor 1420, and the memory 1430 is not limited in embodiments of this application. In this embodiment of this application, in FIG. 14, the memory 1430, the processor 1420, and the transceiver 1410 are connected to each other through a bus 1440. The bus is represented by using a thick line in FIG. 14. A manner of connection between other components is merely described as an example, but is not limited thereto. The bus may be classified into an address bus, a data bus, a control bus, and the like. For ease of representation, the bus is represented by using only one thick line in FIG. 14. However, it does not indicate that there is only one bus or only one type of bus.

In this embodiment of this application, the processor may be a general-purpose processor, a digital signal processor, an application-specific integrated circuit, a field-programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus described in this application), but is not limited thereto. The memory in this embodiment of this application may alternatively be a circuit or any other apparatus that can implement a storage function, and is configured to store the program instructions and/or the data.

For example, the processor 1420 is mainly configured to process a communication protocol and communication data, control the entire communication apparatus, execute a software program, and process data of the software program. The memory 1430 is mainly configured to store the software program and data. The transceiver 1410 may include a control circuit and an antenna. The control circuit is mainly configured to: perform conversion between a baseband signal and a radio frequency signal, and process the radio frequency signal. The antenna is mainly configured to receive or send a radio frequency signal in a form of an electromagnetic wave. An input/output apparatus, such as, a touchscreen, a display, or a keyboard, is mainly configured to: receive data input by a user and output data to the user.

After the communication apparatus is powered on, the processor 1420 may read the software program in the memory 1430, interpret and execute instructions of the software program, and process data of the software program. When data needs to be sent wirelessly, the processor 1420 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1420. The processor 1420 converts the baseband signal into data and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

It may be understood that the communication apparatus described in embodiments of this application may further have more components than those shown in FIG. 14, and the like. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 13, the processing unit 1301 may be one or more logic circuits, and the transceiver unit 1302 may be an input/output interface that is also referred to as a communication interface, an interface circuit, an interface, or the like. Alternatively, the transceiver unit 1302 may be a sending unit and a receiving unit. The sending unit may be an output interface, and the receiving unit may be an input interface. The sending unit and the receiving unit are integrated into one unit, for example, an input/output interface. As shown in FIG. 15, a communication apparatus shown in FIG. 15 includes a logic circuit 1501 and an interface 1502. In other words, the processing unit 1301 may be implemented through the logic circuit 1501, and the transceiver unit 1302 may be implemented through the interface 1502. The logic circuit 1501 may be a chip, a processing circuit, an integrated circuit, a system on chip (system on chip, SoC), or the like. The interface 1502 may be a communication interface, an input/output interface, a pin, or the like. For example, FIG. 15 shows an example in which the communication apparatus is a chip. The chip includes the logic circuit 1501 and the interface 1502.

In this embodiment of this application, the logic circuit and the interface may be further coupled to each other. A specific manner of connection between the logical circuit and the interface is not limited in embodiments of this application.

In some embodiments of this application, the communication apparatus may be configured to perform a step, a function, or the like performed by the AP in the foregoing method embodiments.

For example, the logic circuit 1501 is configured to determine a communication frame, and the interface 1502 is configured to output the communication frame (or the interface 1502 is configured to input a communication frame, and the logic circuit 1501 is configured to parse the communication frame). It may be understood that, for specific descriptions of parsing the communication frame by the logic circuit 1501, refer to the foregoing method embodiment. Details are not described herein.

For example, the logic circuit 1501 is configured to determine a BTM request frame, and the interface 1502 is configured to output the BTM request frame.

For example, the interface 1502 is configured to input a BTM response frame, and the logic circuit 1501 is configured to parse the BTM response frame.

For example, the interface 1502 is configured to input a multi-link reconfiguration request frame, and the logic circuit 1501 is configured to parse the multi-link reconfiguration request frame.

For example, the logic circuit 1501 is configured to determine a multi-link reconfiguration response frame, and the interface 1502 is configured to output the multi-link reconfiguration response frame.

In some other embodiments of this application, the communication apparatus may be configured to perform a step, a function, or the like performed by the STA in the foregoing method embodiments.

For example, the interface 1502 is configured to input a communication frame, and the logic circuit 1501 is configured to parse the communication frame (or the logic circuit 1501 is configured to determine a communication frame, and the interface 1502 is configured to output the communication frame).

It may be understood that, for specific descriptions of parsing the communication frame by the logic circuit 1501, refer to the foregoing method embodiment. Details are not described herein.

For example, the interface 1502 is configured to input a BTM request frame, and the logic circuit 1501 is configured to parse the BTM request frame.

For example, the logic circuit 1501 is configured to determine a BTM response frame, and the interface 1502 is configured to output the BTM response frame.

For example, the logic circuit 1501 is configured to determine a multi-link reconfiguration request frame, and the interface 1502 is configured to output the multi-link reconfiguration request frame.

For example, the interface 1502 is configured to input a multi-link reconfiguration response frame, and the logic circuit 1501 is configured to parse the multi-link reconfiguration response frame.

In still other embodiments of this application, the communication apparatus may be a non-collocated AP MLD or a component that may be disposed in the non-collocated AP MLD. For example, the logic circuit 1501 may be configured to generate a communication frame, and the interface 1502 may be configured to output the communication frame (for example, output the communication frame to an AP).

It may be understood that specific descriptions of the logic circuit and the interface that are described in embodiments of this application are merely examples. For specific functions, performed steps, or the like of the logic circuit and the interface, refer to the foregoing method embodiments. Details are not described herein.

In the foregoing embodiments, for descriptions of the communication frame, the BTM request frame, the BTM response frame, the multi-link reconfiguration request frame, the multi-link reconfiguration response frame, and the like, refer to the descriptions in the foregoing method embodiments. Details are not described herein again.

It may be understood that the communication apparatus described in embodiments of this application may implement the method provided in embodiments of this application in a form of hardware, or may implement the method provided in embodiments of this application in a form of software. This is not limited in embodiments of this application.

An embodiment of this application further provides a wireless communication system. The wireless communication system includes an AP and a STA. The AP and the STA may be configured to perform the method in any of the foregoing embodiments.

In addition, this application further provides a computer program. The computer program is used to implement an operation and/or processing that are/is performed by an AP in the method provided in this application.

This application further provides a computer program. The computer program is used to implement an operation and/or processing that are/is performed by a STA in the method provided in this application.

This application further provides a computer-readable storage medium. The computer-readable storage medium stores computer code. When the computer code is run on a computer, the computer is enabled to perform an operation and/or processing that are/is performed by an AP in the method provided in this application.

This application further provides a computer-readable storage medium. The computer-readable storage medium stores computer code. When the computer code is run on a computer, the computer is enabled to perform an operation and/or processing that are/is performed by a STA in the method provided in this application.

This application further provides a computer program product. The computer program product includes computer code or a computer program. When the computer code or the computer program is run on a computer, an operation and/or processing that are/is performed by an AP in the method provided in this application are/is performed.

This application further provides a computer program product. The computer program product includes computer code or a computer program. When the computer code or the computer program is run on a computer, an operation and/or processing that are/is performed by a STA in the method provided in this application are/is performed.

In the several embodiments provided in this application, it should be understood that the disclosed system, apparatus, and method may be implemented in another manner. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one location, or may be distributed on a plurality of network units. Some or all of the units may be selected based on an actual requirement to achieve the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A multi-link communication method, wherein the method is applied to a first communication apparatus, and the method comprises:
determining a communication frame, wherein the communication frame comprises n multi-link elements, each multi-link element corresponds to one second AP MLD, the multi-link element comprises identifier information of a first access point multi-link device AP MLD and identifier information of the second AP MLD, the n second AP MLDs are affiliated with the first AP MLD, and n is an integer greater than or equal to 1; and
sending the communication frame.

2. The method according to claim 1, wherein the identifier information of the first AP MLD comprises at least one of the following: an identifier ID of the first AP MLD or an MLD medium access control MAC address of the first AP MLD; and
the identifier information of the second AP MLD comprises at least one of the following: an ID of the second AP MLD or an MLD MAC address of the second AP MLD.

3. The method according to claim 2, wherein the multi-link element further comprises a presence bitmap, and the presence bitmap indicates whether the multi-link element comprises at least one of the following: the ID of the first AP MLD, the MLD MAC address of the first AP MLD, the ID of the second AP MLD, or the MLD MAC address of the second AP MLD.

4. The method according to claim 2 or 3, wherein when n is greater than or equal to 2, MLD MAC addresses of first AP MLDs in all the multi-link elements are the same, and IDs of the first AP MLDs in all the multi-link elements are the same.

5. The method according to any one of claims 1 to 4, wherein the communication frame further comprises a reduced neighbor report element, and the reduced neighbor report element carries the identifier information of the first AP MLD and/or the identifier information of the second AP MLD.

6. The method according to any one of claims 1 to 5, wherein the method further comprises:
when the first communication apparatus is an AP, sending a basic service set BSS transition management BTM request frame, wherein the BTM request frame comprises link transition information, and the link transition information indicates whether to perform switching between the second AP MLDs; and
receiving an acknowledgment frame of the BTM request frame; or
when the first communication apparatus is a STA, receiving a BTM request frame, wherein the BTM request frame comprises link transition information, and the link transition information indicates whether to perform switching between the second AP MLDs; and
sending an acknowledgment frame of the BTM request frame.

7. The method according to claim 6, wherein the method further comprises:
when the first communication apparatus is the AP, receiving a BTM response frame, wherein the BTM response frame comprises a target basic service set identifier BSSID, the target BSSID indicates an MLD MAC address of a target AP MLD, and the target AP MLD comprises a first AP MLD or a second AP MLD; and
sending an acknowledgment frame of the BTM response frame; or
when the first communication apparatus is the STA, sending a BTM response frame, wherein the BTM response frame comprises a target basic service set identifier BSSID, the target BSSID indicates an MLD MAC address of a target AP MLD, and the target AP MLD comprises a first AP MLD or a second AP MLD; and
receiving an acknowledgment frame of the BTM response frame.

8. A multi-link communication method, wherein the method is applied to a second communication apparatus, and the method comprises:
receiving a communication frame, wherein the communication frame comprises n multi-link elements, each multi-link element corresponds to one second AP MLD, the multi-link element comprises identifier information of a first access point multi-link device AP MLD and identifier information of the second AP MLD, the n second AP MLDs are affiliated with the first AP MLD, and n is an integer greater than or equal to 1; and
parsing the communication frame.

9. The method according to claim 8, wherein the identifier information of the first AP MLD comprises at least one of the following: an identifier ID of the first AP MLD or an MLD medium access control MAC address of the first AP MLD; and
the identifier information of the second AP MLD comprises at least one of the following: an ID of the second AP MLD or an MLD MAC address of the second AP MLD.

10. The method according to claim 9, wherein the multi-link element further comprises a presence bitmap, and the presence bitmap indicates whether the multi-link element comprises at least one of the following: the ID of the first AP MLD, the MLD MAC address of the first AP MLD, the ID of the second AP MLD, or the MLD MAC address of the second AP MLD.

11. The method according to claim 9 or 10, wherein when n is greater than or equal to 2, MLD MAC addresses of first AP MLDs in all the multi-link elements are the same, and IDs of the first AP MLDs in all the multi-link elements are the same.

12. The method according to any one of claims 8 to 11, wherein the communication frame further comprises a reduced neighbor report element, and the reduced neighbor report element carries the identifier information of the first AP MLD and/or the identifier information of the second AP MLD.

13. The method according to any one of claims 8 to 12, wherein the method further comprises:
when the second communication apparatus is a STA, receiving a BTM request frame, wherein the BTM request frame comprises link transition information, and the link transition information indicates whether to perform switching between the second AP MLDs; and
sending an acknowledgment frame of the BTM request frame; or
when the second communication apparatus is an AP, sending a basic service set BSS transition management BTM request frame, wherein the BTM request frame comprises link transition information, and the link transition information indicates whether to perform switching between the second AP MLDs; and
receiving an acknowledgment frame of the BTM request frame.

14. The method according to claim 13, wherein the method further comprises:
when the second communication apparatus is the STA, sending a BTM response frame, wherein the BTM response frame comprises a target basic service set identifier BSSID, the target BSSID indicates an MLD MAC address of a target AP MLD, and the target AP MLD comprises a first AP MLD or a second AP MLD; and
receiving an acknowledgment frame of the BTM response frame; or
when the second communication apparatus is the AP, receiving a BTM response frame, wherein the BTM response frame comprises a target basic service set identifier BSSID, the target BSSID indicates an MLD MAC address of a target AP MLD, and the target AP MLD comprises a first AP MLD or a second AP MLD; and
sending an acknowledgment frame of the BTM response frame.

15. A multi-link communication method, wherein the method comprises:
sending a multi-link reconfiguration request frame, wherein the multi-link reconfiguration request frame comprises first indication information, the first indication information indicates a request for adding a link, the multi-link reconfiguration request frame further comprises first link information, and the first link information indicates link information of a station side corresponding to the added link; and
receiving a multi-link reconfiguration response frame, wherein the multi-link reconfiguration response frame comprises second link information, and the second link information indicates link information of an access point side corresponding to the added link.

16. A multi-link communication method, wherein the method comprises:
receiving a multi-link reconfiguration request frame, wherein the multi-link reconfiguration request frame comprises first indication information, the first indication information indicates a request for adding a link, the multi-link reconfiguration request frame further comprises first link information, and the first link information indicates link information of a station side corresponding to the added link; and
sending a multi-link reconfiguration response frame, wherein the multi-link reconfiguration response frame comprises second link information, and the second link information indicates link information of an access point side corresponding to the added link.

17. The method according to claim 15 or 16, wherein the first link information comprises at least one of the following information:
capability information, supported rates and basic service set BSS membership selectors, extended supported rates and BSS membership selectors, a power capability, supported channels, a basic multi-link element, or an operating information element OCI element.

18. The method according to any one of claims 15 to 17, wherein the second link information comprises at least one of the following information:
capability information, a status code, supported rates and BSS membership selectors, extended supported rates and BSS membership selectors, an enhanced distributed channel access EDCA parameter set, a fast transition element FTE, a basic multi-link element, or an operating channel information OCI element.

19. The method according to claim 18, wherein the FTE comprises a multi-link operating group temporal key MLO GTK, a multi-link operating integrity group temporal key MLO IGTK, and a multi-link operating beacon integrity group temporal key MLO BIGTK.

20. The method according to any one of claims 15 to 19, wherein the multi-link reconfiguration request frame further comprises a reconfiguration multi-link element, and the reconfiguration multi-link element is used to carry link information of a deleted link or link information of a link whose link operation parameter is updated.

21. The method according to claim 17, wherein the basic multi-link element comprises a common information field, the common information field carries link information of one link in M added links, and M is a positive integer.

22. The method according to claim 21, wherein the common information field comprises at least one of the following: a link identifier ID, a station medium access control STA MAC address, a beacon interval, a timing synchronization function TSF offset, delivery traffic indication message DTIM information, or an NSTR indication bitmap, wherein
the link ID field indicates a link ID of the one link;
the STA MAC address field indicates a STA MAC address of a non-AP MLD side corresponding to the one link, or a BSSID of an AP MLD side corresponding to the one link;
the beacon interval field indicates a beacon interval for the one link;
the TSF offset field indicates a difference between a TSF timer of an AP corresponding to the one link and a TSF timer of a transmit link;
the DTIM information field comprises a DTIM count field and a DTIM period field, wherein the DTIM count field indicates a quantity of beacon frames to a next DTIM, and the DTIM period field indicates a quantity of beacon intervals between two consecutive DTIMs; and
the NSTR indication bitmap indicates whether the one link and another link are NSTR links.

23. The method according to claim 21 or 22, wherein when M is greater than or equal to 2, the basic multi-link element further comprises M-1 per-STA profile subelements, each per-STA profile subelement is used to carry link information of one link in M-1 links, and the M-1 links are M-1 links except for the one link in the N links.

24. The method according to any one of claims 15 to 23, wherein the multi-link reconfiguration response frame further comprises a count field and a reconfiguration status list, the count field indicates a quantity of link IDs and status codes in the reconfiguration status list, and the quantity of link IDs and status codes corresponds to a quantity of per-STA profile subelements carried in the reconfiguration multi-link element in the multi-link reconfiguration request frame.

25. A multi-link communication method, wherein the method comprises:
sending a multi-link reconfiguration request frame, wherein the multi-link reconfiguration request frame comprises a first basic multi-link element, the first basic multi-link element comprises M per-STA profile subelements corresponding to M added links, and each per-STA profile subelement indicates link information of a station STA side corresponding to one link in the M links; and
receiving a multi-link reconfiguration response frame, wherein the multi-link reconfiguration response frame comprises a second basic multi-link element, the second basic multi-link element comprises M per-STA profile subelements corresponding to M added links, and each per-STA profile subelement indicates link information of an access point AP side corresponding to one link in the M links.

26. A multi-link communication method, wherein the method comprises:
receiving a multi-link reconfiguration request frame, wherein the multi-link reconfiguration request frame comprises a first basic multi-link element, the first basic multi-link element comprises M per-STA profile subelements corresponding to M added links, and each per-STA profile subelement indicates link information of a station STA side corresponding to one link in the M links; and
sending a multi-link reconfiguration response frame, wherein the multi-link reconfiguration response frame comprises a second basic multi-link element, the second basic multi-link element comprises M per-STA profile subelements corresponding to M added links, and each per-STA profile subelement indicates link information of an access point AP side corresponding to one link in the M links.

27. The method according to claim 25 or 26, wherein the multi-link reconfiguration request frame further comprises a reconfiguration multi-link element, and the reconfiguration multi-link element is used to carry link information of a deleted link or link information of a link whose link operation parameter is updated.

28. The method according to any one of claims 25 to 27, wherein the multi-link reconfiguration response frame further comprises a count field and a reconfiguration status list, the count field indicates a quantity of link IDs and status codes in the reconfiguration status list, and the quantity of link IDs and status codes corresponds to a quantity of per-STA profile subelements carried in the reconfiguration multi-link element in the multi-link reconfiguration request frame.

29. The method according to any one of claims 25 to 28, wherein a common information field in the first basic multi-link element does not comprise a link identifier ID field.

30. A communication apparatus, comprising a unit configured to perform the method according to any one of claims 1 to 29.

31. A communication apparatus, comprising a processor and a memory, wherein
the memory is configured to store instructions; and
the processor is configured to execute the instructions, to perform the method according to any one of claims 1 to 29.

32. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 29.

33. A computer-readable storage medium, wherein the computer-readable storage medium is configured to store a computer program, and when the computer program is executed, the method according to any one of claims 1 to 29 is performed.

34. A computer program, wherein when the computer program is executed, the method according to any one of claims 1 to 29 is performed.

35. A communication system, wherein the communication system comprises a first communication apparatus and a second communication apparatus, the first communication apparatus is configured to perform the method according to any one of claims 1 to 7, and the second communication apparatus is configured to perform the method according to any one of claims 8 to 14.

36. A communication system, wherein the communication system comprises a station STA and an access point AP, the STA is configured to perform the method according to any one of claims 15, 17 to 25, and 27 to 29, and the AP is configured to perform the method according to any one of claims 16 to 24 and 26 to 29.
